(19) Europäisches Patentamt
European Patent Office
Office européen des brevets

(11) EP 4 711 398 A1

(12) EUROPEAN PATENT APPLICATION
published in accordance with Art. 153(4) EPC

(43) Date of publication:
**18.03.2026 Bulletin 2026/12**

(21) Application number: **24807106.0**

(22) Date of filing: **09.05.2024**

(51) International Patent Classification (IPC):
***C08G 64/02*** *(2006.01)* ***C08G 63/64*** *(2006.01)*
***C08G 63/672*** *(2006.01)* ***C08G 64/16*** *(2006.01)*
***G02B 3/00*** *(2006.01)*

(52) Cooperative Patent Classification (CPC):
**C08G 63/64; C08G 63/672; C08G 64/02; C08G 64/16; G02B 3/00**

(86) International application number:
**PCT/JP2024/017197**

(87) International publication number:
**WO 2024/237154 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.05.2023 JP 2023078986**

(71) Applicant: **MITSUBISHI GAS CHEMICAL COMPANY, INC.**
**Chiyoda-ku**
**Tokyo 100-8324 (JP)**

(72) Inventors:
- **KATO, Noriyuki**
  **Tokyo 100-8324 (JP)**
- **NISHIMORI, Katsushi**
  **Tokyo 125-8601 (JP)**
- **MOTEGI, Atsushi**
  **Tokyo 125-8601 (JP)**
- **ISHIHARA, Kentaro**
  **Tokyo 100-8324 (JP)**
- **MURATA SUZUKI, Shoko**
  **Tokyo 125-8601 (JP)**
- **ARAI, Yuta**
  **Tokyo 125-8601 (JP)**
- **SUGA, Tatsuya**
  **Tokyo 125-8601 (JP)**

(74) Representative: **Hoffmann Eitle**
**Patent- und Rechtsanwälte PartmbB**
**Arabellastraße 30**
**81925 München (DE)**

# (54) THERMOPLASTIC RESIN AND OPTICAL LENS INCLUDING SAME

(57) According to the present invention, there can be provided a thermoplastic resin, comprising a constituent unit (A) derived from a compound represented by the following general formula (1):

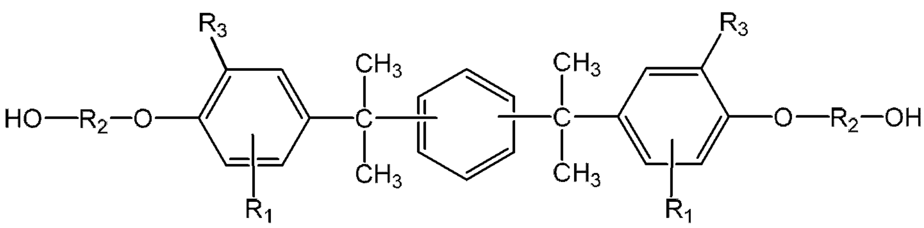

(1)

wherein $R_1$ each independently represents a hydrogen atom or a linear or branched alkyl group containing 1 to 4 carbon atoms, $R_2$ each independently represents an alkylene group containing 1 to 4 carbon atoms, $R_3$ each independently represents a linear, branched or cyclic alkyl group containing 4 to 6 carbon atoms.

EP 4 711 398 A1

## Description

### Technical Field

The present invention relates to a thermoplastic resin and an optical lens comprising the same. More specifically, the present invention relates to a polycarbonate resin, a polyester carbonate resin, or a polyester resin, and an optical lens comprising the same.

### Background Art

As materials for optical lenses used in the optical systems of various types of cameras such as a camera, a film-integrated camera and a video camera, optical glasses or optical resins have been used. Such optical glasses are excellent in heat resistance, transparency, dimensional stability, chemical resistance and the like. However, the optical glasses are problematic in terms of high material costs, poor formability and low productivity.

On the other hand, an optical lens consisting of an optical resin is advantageous in that it can be produced in a large amount by injection molding, and as materials having a high refractive index for use in camera lenses, polycarbonate, polyester carbonate, polyester resins, etc. have been used.

When such an optical resin is used as an optical lens, the used optical resin is required to have heat resistance, transparency, low water absorbability, chemical resistance, low birefringence, moist-heat resistance, etc., in addition to optical properties such as refractive index and Abbe number. In particular, in recent years, optical lenses having a high refractive index and high heat resistance have been required, and thus, various resins have been developed (Patent Literatures 1 to 5).

### Citation List

### Patent Literature

Patent Literature 1: JP Patent Publication (Kokai) No. 2018-2893 A
Patent Literature 2: JP Patent Publication (Kokai) No. 2018-2894 A
Patent Literature 3: JP Patent Publication (Kokai) No. 2018-2895 A
Patent Literature 4: JP Patent Publication (Kokai) No. 2018-59074 A
Patent Literature 5: WO2017/078073

### Summary of Invention

### Technical Problem

It is an object of the present invention to provide a thermoplastic resin that is excellent in optical properties such as refractive index, Abbe number and photoelastic coefficient, and an optical lens using the same.

### Solution to Problem

As a result of intensive studies directed towards solving the conventional problem, the present inventors have found that a thermoplastic resin that is excellent in optical properties such as refractive index, Abbe number and photoelastic coefficient can be obtained by using a monomer having a specific structure as a raw material, thereby completing the present invention.

Specifically, the present invention includes the following aspects.

< 1 > A thermoplastic resin, comprising a constituent unit (A) derived from a compound represented by the following general formula (1):

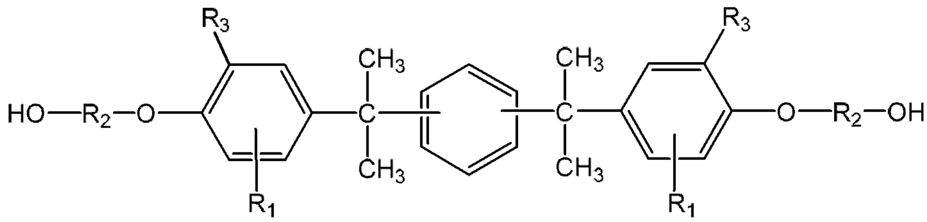

(1)

wherein $R_1$ each independently represents a hydrogen atom or a linear or branched alkyl group containing 1 to 4 carbon atoms, $R_2$ each independently represents an alkylene group containing 1 to 4 carbon atoms, $R_3$ each independently represents a linear, branched or cyclic alkyl group containing 4 to 6 carbon atoms.

< 2 > The thermoplastic resin according to the above < 1 >, wherein the compound represented by the general formula (1) is a compound represented by the following general formula (1A) or (1B):

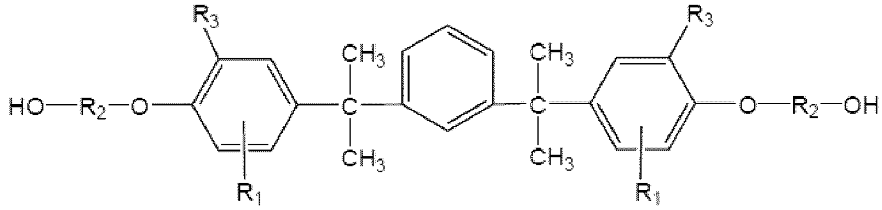

(1A)

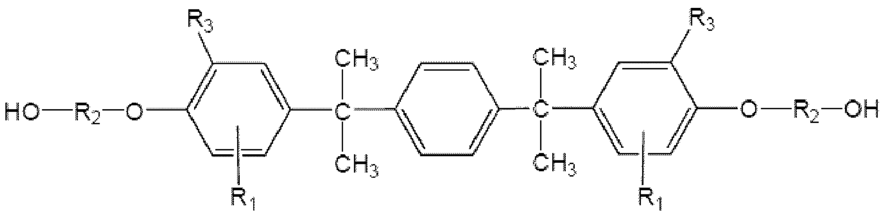

(1B)

wherein $R_1$, $R_2$ and $R_3$ are the same as those in the general formula (1).

< 3 > The thermoplastic resin according to the above < 1 >, wherein $R_3$ in the compound represented by the general formula (1) is a t-butyl group or a cyclohexyl group.

< 4 > The thermoplastic resin according to the above < 1 >, which is a polycarbonate resin, a polyester carbonate resin, or a polyester resin.

< 5 > The thermoplastic resin according to the above < 1 >, which comprises a constituent unit (B) derived from a monomer represented by the following general formula (6) and/or a constituent unit (C) derived from a monomer represented by the following general formula (7):

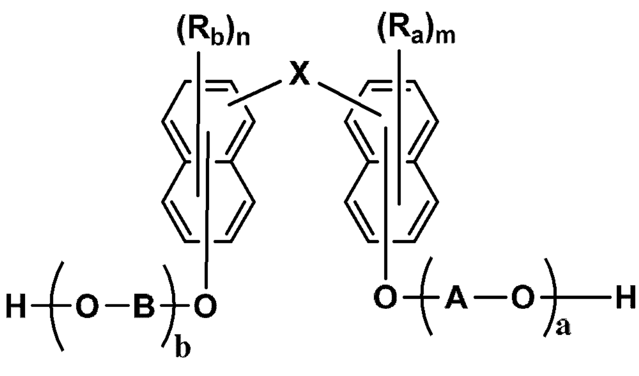

(6)

wherein, in the general formula (6),

$R_a$ and $R_b$ are each independently selected from the group consisting of a hydrogen atom, a halogen atom, an alkyl group containing 1 to 20 carbon atoms and optionally having a substituent, an alkoxy group containing 1 to 20 carbon atoms and optionally having a substituent, a cycloalkyl group containing 5 to 20 carbon atoms and

optionally having a substituent, a cycloalkoxy group containing 5 to 20 carbon atoms and optionally having a substituent, and an aryl group containing 6 to 20 carbon atoms and optionally having a substituent, a heteroaryl group containing 6 to 20 carbon atoms and optionally having a substituent, which comprises one or more heterocyclic atoms selected from O, N and S, an aryloxy group containing 6 to 20 carbon atoms and optionally having a substituent, and $-C \equiv C-R_h$, wherein

$R_h$ represents an aryl group containing 6 to 20 carbon atoms and optionally having a substituent, or a heteroaryl group containing 6 to 20 carbon atoms and optionally having a substituent, which comprises one or more heterocyclic atoms selected from O, N and S,

X represents a single bond or a fluorene group optionally having a substituent,

A and B each independently represent an alkylene group containing 1 to 5 carbon atoms and optionally having a substituent,

m and n each independently represent an integer of 0 to 6, and

a and b each independently represent an integer of 0 to 10,

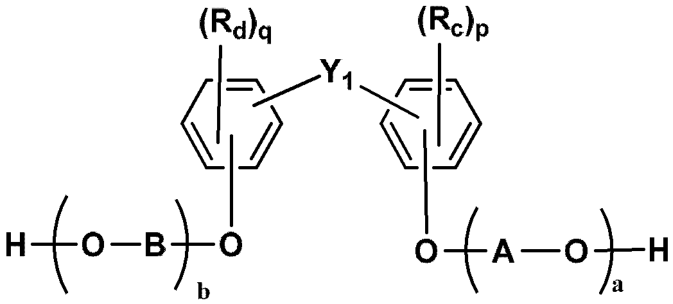

(7)

wherein, in the general formula (7),

$R_c$ and $R_d$ are each independently selected from the group consisting of a hydrogen atom, a halogen atom, an alkyl group containing 1 to 20 carbon atoms and optionally having a substituent, an alkoxy group containing 1 to 20 carbon atoms and optionally having a substituent, a cycloalkyl group containing 5 to 20 carbon atoms and optionally having a substituent, a cycloalkoxy group containing 5 to 20 carbon atoms and optionally having a substituent, and an aryl group containing 6 to 20 carbon atoms and optionally having a substituent,

$Y_1$ represents any of a single bond, a fluorene group optionally having a substituent, or any of structural formulae represented by the following formulae (8) to (15):

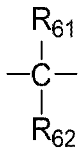

(8)

$-S-$

(9)

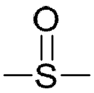

(10)

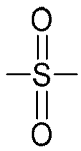

(11)

$-(CH_2)_r-$

(12)

$-O-$

(13)

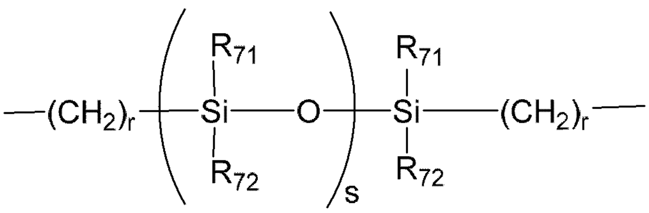

(14)

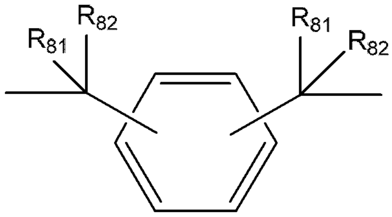

(15)

(wherein, in the formulae (8) to (15),

$R_{61}$, $R_{62}$, $R_{71}$, $R_{72}$, $R_{81}$ and $R_{82}$ are each independently represent a hydrogen atom, a halogen atom, an alkyl group containing 1 to 20 carbon atoms and optionally having a substituent, or an aryl group containing 6 to 30 carbon atoms and optionally having a substituent, or $R_{61}$ and $R_{62}$, or $R_{71}$ and $R_{72}$ bind to each other to form a carbon ring or heteroring, containing 1 to 20 carbon atoms and optionally having a substituent, and

r and s each independently represent an integer of 0 to 5000),

A and B each independently represent an alkylene group containing 1 to 5 carbon atoms and optionally having a substituent,

p and q each independently represent an integer of 0 to 4, and

a and b each independently represent an integer of 0 to 10.

< 6 > The thermoplastic resin according to the above < 5 >, wherein in the general formula (6) and the general formula (7), the A and B each independently represent an alkylene group containing 2 or 3 carbon atoms.

< 7 > The thermoplastic resin according to the above < 5 >, which comprises, at least, a constituent unit derived from any of BPEF, BNE, BNEF, DPBHBNA, BPM, and BCFL.

< 8 > The thermoplastic resin according to the above < 1 >, which comprises a constituent unit derived from at least one monomer selected from the following monomer group:

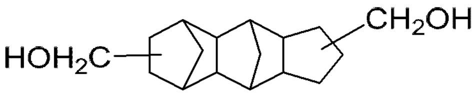 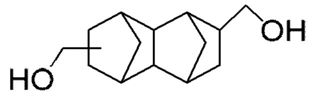

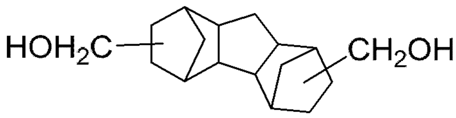 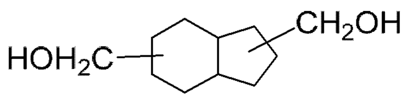

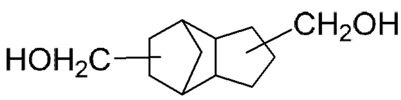 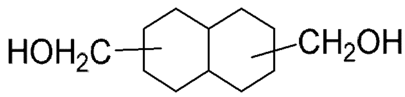

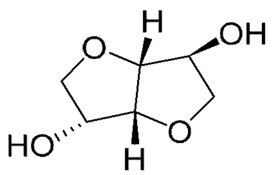 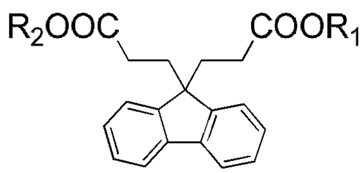

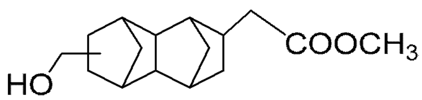 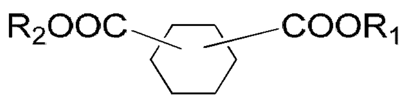

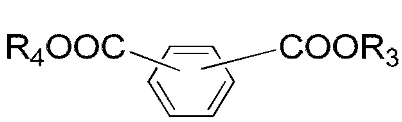 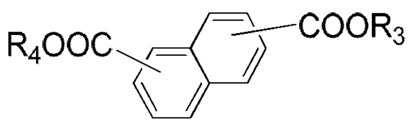

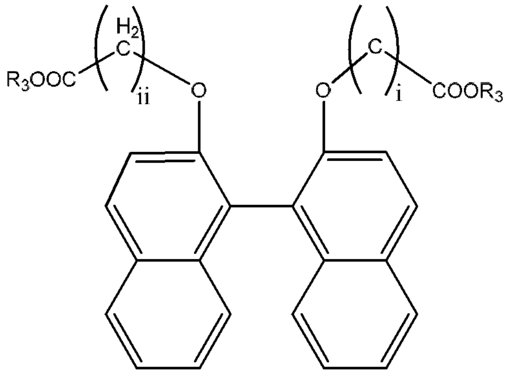

wherein $R_1$ and $R_2$ each independently represent a hydrogen atom, a methyl group or an ethyl group, $R_3$ and $R_4$ each independently represent an aryl group, hydrogen atom, a methyl group, an ethyl group or alkylene glycol containing 2 to 5 carbon atoms, and i and ii each independently represent an integer of 1 to 3.

< 9 > The thermoplastic resin according to the above < 1 >, which has a polystyrene-converted weight average molecular weight (Mw) of 10,000 to 100,000.

< 10 > The thermoplastic resin according to the above < 1 >, which has a refractive index(nD) of 1.500 to 1.700.

< 11 > The thermoplastic resin according to the above < 1 >, which has an Abbe number (v) of 22.0 to 35.0.

< 12 > The thermoplastic resin according to the above < 1 >, which has a glass transition temperature of 125°C to 150°C.

< 13 > The thermoplastic resin according to the above < 1 >, which has a photoelastic coefficient of 25 to 45.

< 14 > The thermoplastic resin according to the above < 1 >, which has a water absorption percentage of 0.40% or less.

< 15 > The thermoplastic resin according to the above < 1 >, which has a water absorption dimensional change percentage of 0.045% or less.

< 16 > An optical lens, comprising the thermoplastic resin according to the above < 1 >.

Advantageous Effects of Invention

According to the present invention, there can be provided a thermoplastic resin that is excellent in optical properties such as refractive index, Abbe number and photoelastic coefficient, and an optical lens comprising the same.

Brief Description of Drawings

[Figure 1] Figure 1 is a view showing a chart of differential scanning calorimetry (DSC) data for the crystals of bis[1-methyl-1-(4-hydroxyethoxy-3-cyclohexyl-6-methylphenyl)ethyl]benzene obtained in Synthetic Example 1.

[Figure 2] Figure 2 is a view showing a chart of powder X-ray diffraction (PXRD) measurement of the crystals of bis[1-methyl-1-(4-hydroxyethoxy-3-cyclohexyl-6-methylphenyl)ethyl]benzene obtained in Synthetic Example 1.

Description of Embodiments

Hereinafter, the present invention will be described in detail by exemplifying synthetic examples, examples, and the like, but the present invention is not limited to the exemplified synthetic examples, examples, and the like. The methods described below can be changed to any methods within a range that does not greatly deviate from the contents of the present invention.

< Thermoplastic resin >

One embodiment of the present invention relates to a thermoplastic resin, comprising a constituent unit (A) derived from a compound represented by the following general formula (1):

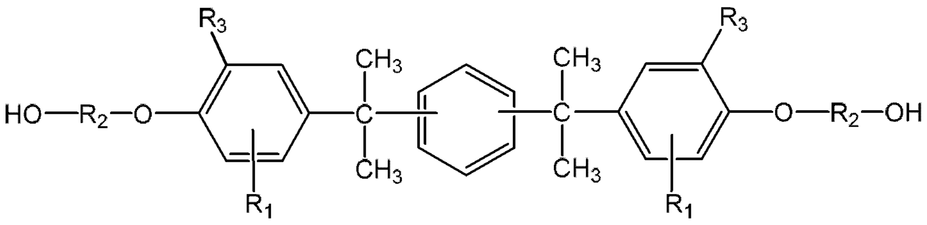

(1)

wherein $R_1$ each independently represents a hydrogen atom or a linear or branched alkyl group containing 1 to 4 carbon atoms, $R_2$ each independently represents an alkylene group containing 1 to 4 carbon atoms, $R_3$ each independently represents a linear, branched or cyclic alkyl group containing 4 to 6 carbon atoms.

Specific examples of the linear or branched alkyl group containing 1 to 4 carbon atoms represented by $R_1$ in the general formula (1) may include a methyl group, an ethyl group, an isopropyl group, and a t-butyl group.

$R_1$ in the general formula (1) each independently preferably represents a hydrogen atom, a methyl group, an ethyl group, an isopropyl group or a t-butyl group, and each independently more preferably represents a hydrogen atom or a methyl group, and both $R_1$ are particularly preferably methyl groups.

Regarding $R_1$ in the general formula (1), both of two $R_1$ are preferably the same substituents as each other.

In a case where the $R_1$ in the general formula (1) is a linear or branched alkyl group containing 1 to 4 carbon atoms, the binding position thereof to the benzene ring is preferably position 5 or position 6, when the binding position of $R_3$ is position 3 and the binding position of an oxygen atom is position 4.

$R_2$ in the general formula (1) each independently preferably represents a methylene group, a 1,2-ethylene group, a 1-methyl-1,2-ethylene group or a 2-methyl-1,2-ethylene group, and both $R_2$ are particularly preferably 1,2-ethylene groups.

Regarding $R_2$ in the general formula (1), both of two $R_2$ are preferably the same substituents as each other.

$R_3$ in the general formula (1) each independently preferably represents a branched or cyclic alkyl group containing 4 to 6 carbon atoms, each independently more preferably represents a branched tertiary alkyl group containing 4 to 6 carbon atoms or a cyclic alkyl group containing 5 or 6 carbon atoms, each independently further preferably represents a t-butyl group or a cyclohexyl group, and both $R_3$ are particularly preferably cyclohexyl groups.

Regarding $R_3$ in the general formula (1), both of two $R_3$ are preferably the same substituents as each other.

The compound (1) of the present invention is preferably a compound represented by the following general formula (1A) (hereinafter also referred to as "compound (1A)") or a compound represented by the following general formula (1B) (hereinafter also referred to as "compound (1B)"), and the compound represented by the general formula (1A) is particularly preferable:

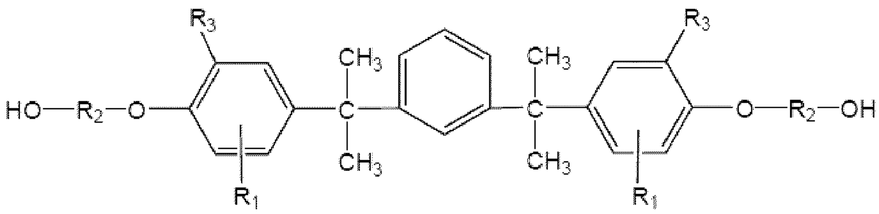

(1A)

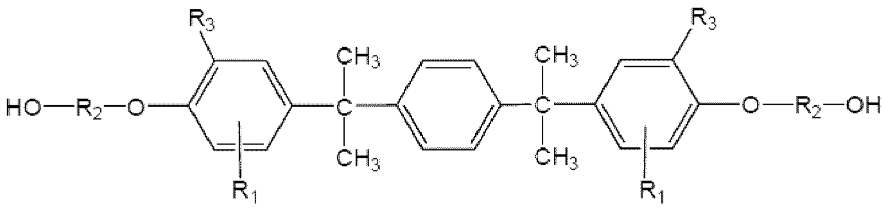

(1B)

wherein $R_1$, $R_2$, and $R_3$ in the general formula (1A) and the general formula (1B) are the same as those in the general formula (1), and preferred aspects thereof are also the same.

Specific examples of the compound (1) of the present invention may include compounds represented by the following formulae (1-1) to (1-10):

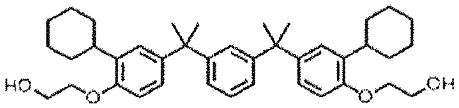 (1-1) 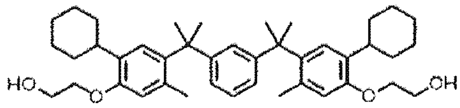 (1-2)

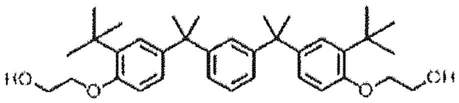 (1-3) 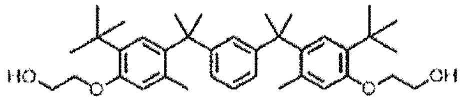 (1-4)

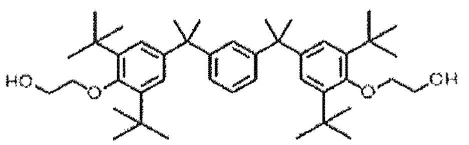 (1-5)

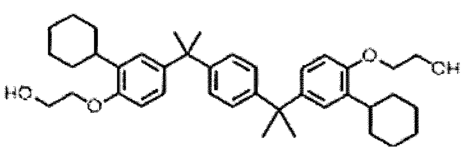 (1-6) 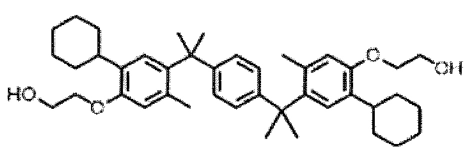 (1-7)

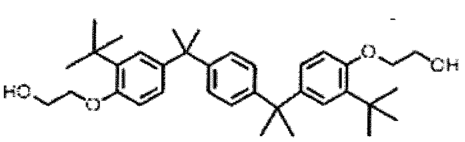 (1-8) 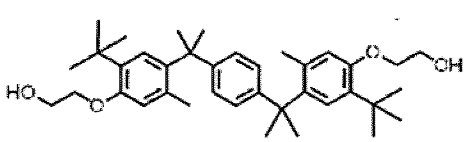 (1-9)

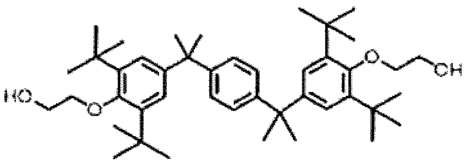 (1-10)

The compounds represented by the formulae (1-1) to (1-5) are specific examples of the compound (1A). Among these, the compounds (1-1), (1-2), (1-4) and (1-5) are preferable, the compounds (1-2), (1-4) and (1-5) are more preferable, the compounds (1-2) and (1-4) are further preferable, and the compound (1-2) is particularly preferable.

The compounds represented by the formulae (1-6) to (1-10) are specific examples of the compound (1B). Among these, the compounds (1-6), (1-7), (1-9) and (1-10) are preferable, the compounds (1-7), (1-9) and (1-10) are more preferable, the compounds (1-7) and (1-9) are further preferable, and the compound (1-7) is particularly preferable.

< Method for producing compound represented by general formula (1) >

The compound represented by the general formula (1), bis[1-methyl-1-(4-hydroxyalkoxy-3-alkylphenyl)ethyl] benzene], which is used in the present invention, is not particularly limited in terms of starting raw materials and production methods for the production thereof. For example, there is applied a production method of allowing a bisphenol compound represented by the following general formula (2) to react with a hydroxyalkylene oxygenating agent:

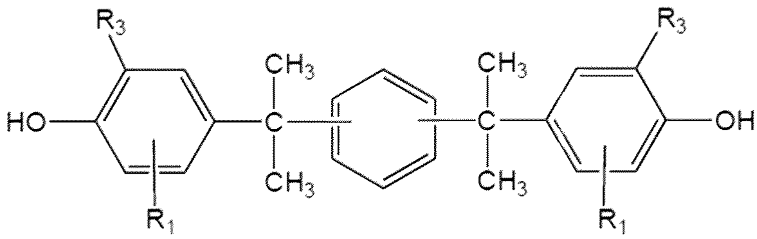 (2)

wherein $R_1$ and $R_3$ are the same as those in the general formula (1).

$R_1$ and $R_3$ in the bisphenol compound represented by the general formula (2) (hereinafter also referred to as

compound (2)) are the same as those in the general formula (1), and preferred aspects thereof are also the same.

As such a compound (2), a compound represented by the following general formula (2A) (hereinafter also referred to as compound (2A)) or a compound represented by the following general formula (2B) (hereinafter also referred to as compound (2B)) is preferable, and the compound represented by the general formula (2A) is particularly preferable.

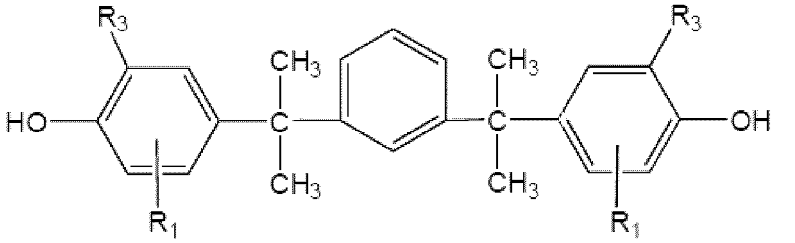

(2A)

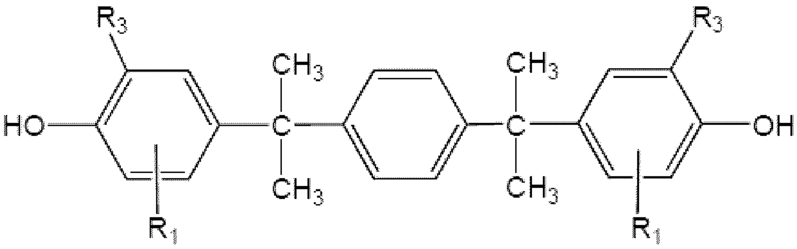

(2B)

wherein $R_1$ and $R_3$ are the same as those in the general formula (1).

$R_1$ and $R_3$ in the general formula (2A) and the general formula (2B) are the same as those in the general formula (1), and preferred aspects thereof are also the same.

Specific examples of the compound (2) may include compounds represented by the following formulae (2-1) to (2-10):

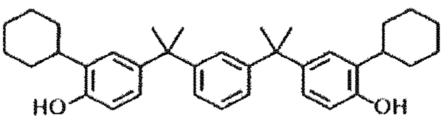

**(2-1)**

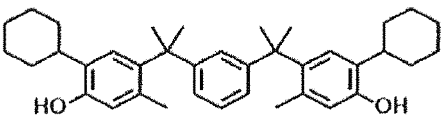

**(2-2)**

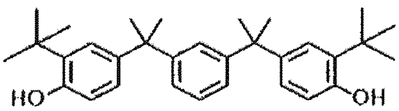

**(2-3)**

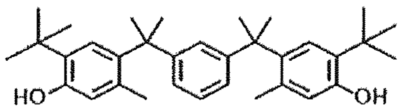

**(2-4)**

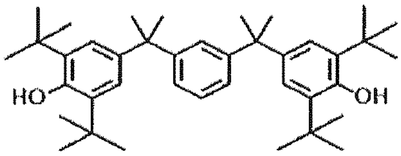

**(2-5)**

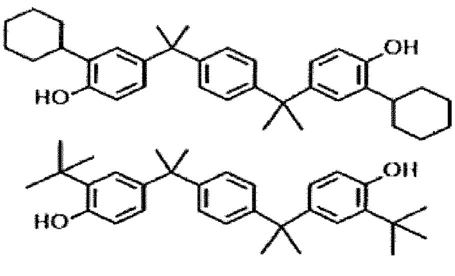

**(2-6)**

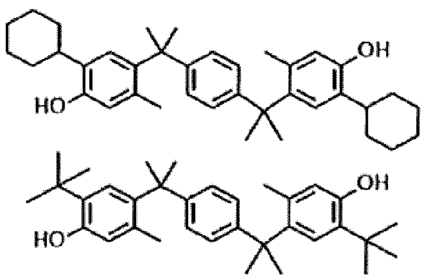

**(2-7)**

**(2-8)**

**(2-9)**

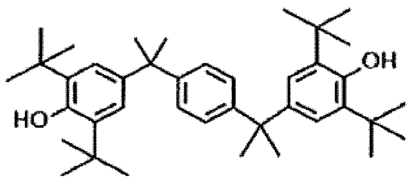

(2-10)

The compounds represented by the formulae (2-1) to (2-5) are specific examples of the compound (2A). Among these, the compounds (2-1), (2-2), (2-4) and (2-5) are preferable, the compounds (2-2), (2-4) and (2-5) are more preferable, the compounds (2-2) and (2-4) are further preferable, and the compound (2-2) is particularly preferable.

The compounds represented by the formulae (2-6) to (2-10) are specific examples of the compound (2B). Among these, the compounds (2-6), (2-7), (2-9) and (2-10) are preferable, the compounds (2-7), (2-9) and (2-10) are more preferable, the compounds (2-7) and (2-9)are further preferable, and the compound (2-7) is particularly preferable.

As hydroxyalkylene oxygenating agents, for example, carbonates (3) represented by the following general formula (3), such as ethylene carbonate and propylene carbonate, halogenated alcohols such as 2-chloroethanol and 3-chloro-1-propanol, and alkylene oxides such as ethylene oxide, can be used depending on a compound of interest.

As a hydroxyalkylene oxygenating agent used, the carbonate (3) represented by the following general formula (3) is preferably used:

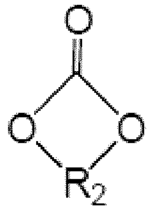

(3)

wherein $R_2$ is the same as that in the general formula (1).

$R_2$ in the general formula (3) is the same as that in the general formula (1), and a preferred aspect thereof is also the same.

The reaction formula for obtaining the compound used in the present invention, in a case where the carbonate (3) represented by the general formula (3) is used as a hydroxyalkylene oxygenating agent, is exemplified below:

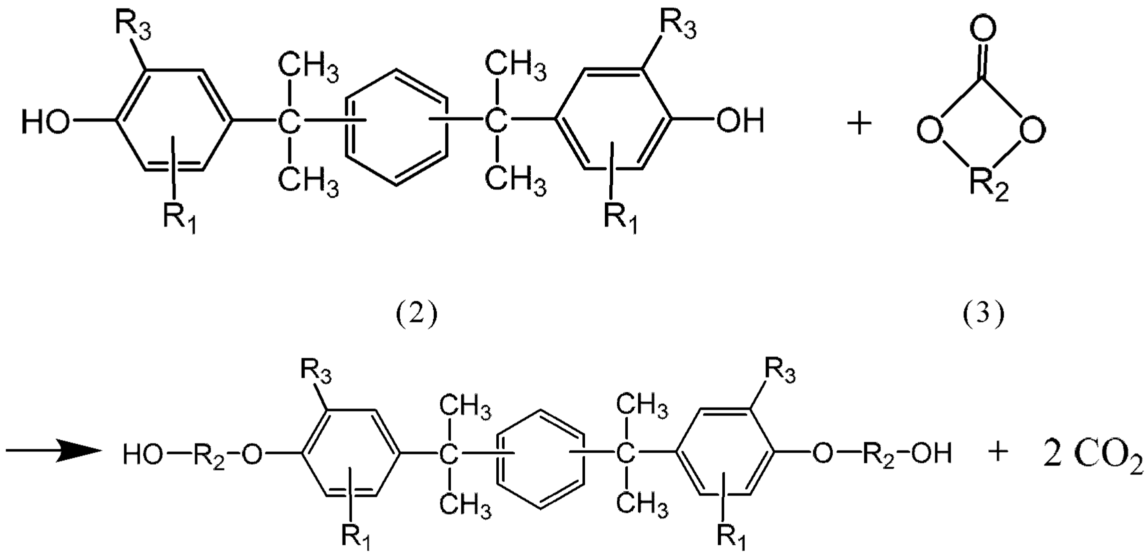

(2)

(3)

(1)

Moreover, the reaction formula for obtaining the compound (1-2) as a compound (1), using the compound (2-2) as a compound (2) and ethylene carbonate as a hydroxyalkylene oxygenating agent, is exemplified below:

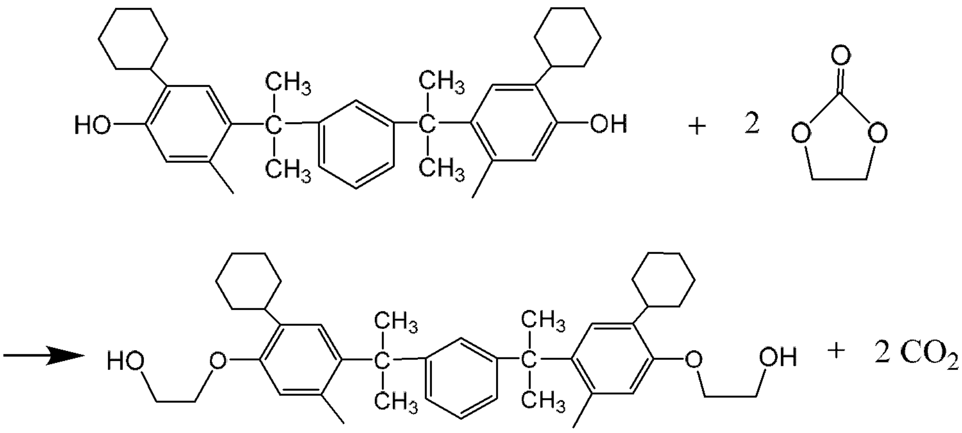

The method for producing the compound (1) in the case of using the carbonate (3) as an alkylene oxygenating agent, as shown in the above reaction formula, will be described below.

(Amount of raw materials used)

With regard to the raw material molar ratio between the compound (2) and the carbonate (3), the compound (2)/the carbonate (3) is generally in the range of 1/2 to 1/5, preferably in the range of 1/2 to 1/4, more preferably in the range of 1/2 to 1/3, and particularly preferably in the range of 1/2 to 1/2.5.

(Basic catalysts)

In the above-described production method, it is preferable to use a basic catalyst during the reaction, and a generally known basic catalyst can be used as such a basic catalyst. Specific examples may include triorganophosphine compounds such as triphenylphosphine and tributylphosphine, amine catalysts such as 1-methylimidazole, and alkaline catalysts such as potassium carbonate, calcium carbonate, magnesium carbonate, magnesium hydroxide, calcium hydroxide, sodium hydroxide, sodium hydrogen carbonate, methoxysodium, and phenoxysodium. These basic catalysts may be used alone or in combination of two or more types.

The amount of this basic catalyst used is 0.001% to 10% by weight of the compound (2), preferably 0.01% to 5% by weight, and more preferably 0.1% to 5% by weight.

(Reaction solvents)

It is possible to carry out the reaction without using a solvent by using the carbonate (3) in an excess amount, but from the viewpoint of economy and operability, it is generally preferable to carry out the reaction using an organic solvent.

When a reaction solvent is used, various types of known solvents that are inactive to the reaction can be used. Examples of such reaction solvents may include aromatic hydrocarbon solvents such as toluene and xylene, ether solvents such as tetrahydrofuran, dioxane, and 1,2-dimethoxyethane, aliphatic ketone solvents such as acetone and methyl isobutyl ketone, halogenated hydrocarbon solvents such as chloroform and 1,2-dichloroethane, aliphatic alcohol solvents such as butanol and ethylene glycol, and polar solvents such as dimethylformamide and dimethylsulfoxide. Among them, aromatic hydrocarbon solvents containing 6 to 9 carbon atoms or aliphatic ketone solvents containing 3 to 9 carbon atoms are preferable.

The amount of the reaction solvent used is not particularly limited, and it is preferably in the range of 0.5 to 10 times by weight, and more preferably in the range of 0.5 to 5 times by weight, with respect to the compound (2).

(Phase transfer catalysts)

In the above-described production method, it is preferable to use a phase transfer catalyst during the reaction, and a generally known phase transfer catalyst can be used as such a phase transfer catalyst. Specific examples of the phase transfer catalyst that can be preferably used herein may include quaternary ammonium salts or quaternary phosphonium salts, and quaternary ammonium salts are more preferable. Specific examples of the quaternary ammonium salts may include tetrabutylammonium chloride, tetrabutylammonium bromide, tetraethylammonium chloride, tetraethylammonium bromide, tetramethylammonium chloride, and tetramethylammonium bromide. Specific examples of the quaternary phosphonium salts may include tetrabutylphosphonium chloride, tetrabutylphosphonium bromide, and

tetraphenylphosphonium bromide. These phase transfer catalysts may be used alone or in combination of two or more types. The amount of the phase transfer catalyst used is in the range of 0.001% to 10% by weight of the compound (2), and preferably in the range of 0.01% to 1% by weight thereof.

(Reaction conditions)

The reaction temperature is not particularly limited, as long as it is a temperature at which the reaction proceeds, and the reaction is generally carried out under heating. For example, although it depends on the type of a solvent used, the reaction is carried out generally in the range of 50°C and 250°C, preferably in the range of 70°C and 200°C, and more preferably in the range of 100°C and 180°C. The reaction is more preferable carried out under reflux of the solvent.

The reaction time depends on the reaction temperature, the amount and type of the compound (2), the carbonate (3), the basic catalyst, the reaction solvent, and the phase transfer catalyst, which are to be used, etc., and it is generally carried out for about 3 to 48 hours. In the present reaction, the time point when generation of carbon dioxide gas is terminated can be considered to be the end of the reaction.

(Neutralization step)

When a basic catalyst is used in the above-described production method, it is preferable to carry out a neutralization step, in which acid-containing water (e.g., hydrochloric acid or sulfuric acid), acetic acid, propionic acid, etc. is added to the obtained reaction solution to neutralize the basic catalyst. This neutralization step may be carried out after the hydrolysis step described below.

(Hydrolysis step)

In the reaction in the above-described production method, since an excess amount of carbonate (3) is added, the carbonate (3) remains in the reaction solution even after completion of the reaction. If a treatment such as heating is carried out in this state, a side reaction may proceed, and the purity and yield of the compound (1) that is a compound of interest may be decreased. For this reason, it is preferable to carry out the hydrolysis step of the carbonate (3) by adding water. The amount of the water used is in the range of 1 to 10 molar times the amount of the carbonate (3) used in the above-described reaction. It may be adequate if the temperature is lower than the boiling point of the reaction solution. In general, the temperature is in the range of room temperature to lower than the boiling point of the reaction solution. Specifically, the lower limit is 10°C or higher, and more preferably 20°C or higher. The upper limit depends on the boiling point of the solvent used, and it is preferably 150°C or lower.

(Post-treatment step)

Thereafter, as necessary, in order to remove water-soluble impurities, such as the basic catalyst, salts produced in the neutralization step, and glycols produced in the hydrolysis step, a solvent that dissolves the compound (1) and separates it from water (e.g., an aliphatic ketone solvent containing 5 to 9 carbon atoms) may be added to form a solution, and a water-washing step in which the solution is washed with water may be performed. Such a water-washing step is preferably performed.

The liquid that has undergone the above steps is subjected to a separation step that is performed by crystallization, filtration, distillation, column chromatography, etc. and to a drying step, etc., so that the compound (1) that is a compound of interest can be obtained.

To further increase the purity, the obtained compound (1) may be further subjected to distillation, recrystallization, or purification by column chromatography, in accordance with ordinary methods.

Another method for producing the compound represented by the general formula (1) of the present invention, bis [1-methyl-1-(4-hydroxyalkoxy-3-alkylphenyl)-1-methylethyl]benzene, may be a production method comprising allowing 4-hydroxyalkoxy-3-alkylbenzene represented by the following general formula (4) (benzene (4)) to react with diol (5) represented by the following general formula (5):

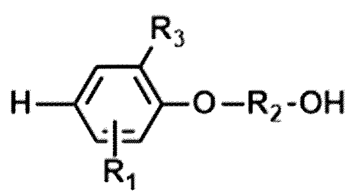

(4)

wherein $R_1$, $R_2$ and $R_3$ are the same as those in the general formula (1),

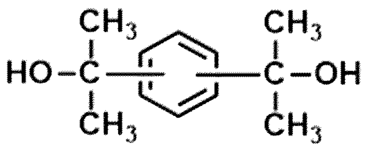
(5)

< 4-Hydroxyalkoxy-3-alkylbenzene represented by general formula (4) >

$R_1$, $R_2$ and $R_3$ in the benzene (4) are the same as those in the general formula (1), and preferred aspects thereof are also the same.

Specific examples of the benzene (4) may include compounds represented by the following formulae (4-1) to (4-5):

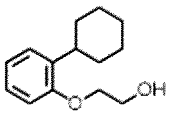
(4-1)
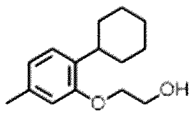
(4-2)
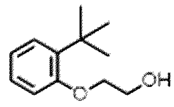
(4-3)

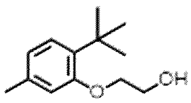
(4-4)
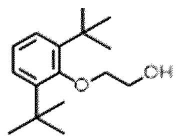
(4-5)

Among these, the compounds (4-1), (4-2), (4-4) and (4-5) are preferable, the compounds (4-1), (4-2) and (4-5) are more preferable, the compounds (4-1) and (4-2) are further preferable, and the compound (4-2) is particularly preferable.

< Diol (5) represented by general formula (5) >

Specific examples of the diol (5) may include 1,4-di(2-hydroxyisopropyl)benzene, 1,3-di(2-hydroxyisopropyl) benzene, and 1,2-di(2-hydroxyisopropyl)benzene. Among these, 1,4-di(2-hydroxyisopropyl)benzene or 1,3-di(2-hydroxyisopropyl)benzene is preferable, and 1,3-di(2-hydroxyisopropyl)benzene is particularly preferable.

In this production method, the amount of the benzene (4) used is preferably in the range of 5 to 12 moles, more preferably in the range of 7 to 10 moles, and further preferably 8 moles, with respect to 1 mole of the diol (5).

The above-described production method is preferably carried out in the presence of an acid catalyst. Preferred acid catalysts include concentrated hydrochloric acid, sulfuric acid, and hydrochloric acid gas. Among these, it is more preferable to use hydrochloric acid gas until it is saturated in the reaction solution.

The reaction is generally carried out in the presence of a solvent. The solvent is not particularly limited, as long as it does not inhibit the reaction.

The above-described production method may be carried out in either in an ambient atmosphere or in an inert gas atmosphere, and in order to suppress coloration of the reaction product, the production method is preferably carried out in an inert gas atmosphere such as nitrogen or argon.

The reaction temperature is generally in the range of 2°C to 60°C, and preferably in the range of 20°C to 40°C.

Regarding the reaction pressure, the reaction may be carried out under normal pressure conditions, or under pressurized pressure conditions, or under reduced pressure conditions. The reaction is preferably carried out under normal pressure conditions.

The resulting reaction mixture is separated and/or purified according to an ordinary method, so that the compound (1) can be obtained from the reaction mixture.

< Crystal of compound represented by formula (1-2) >

Among the compounds (1) used in the present invention, a crystal of the compound represented by the formula (1-2) (compound (1-2); 1,3-bis[1-methyl-1-{4-(2-hydroxyethoxy)-3-cyclohexyl-6-methylphenyl}ethyl]benzene) is extremely useful, since the compound (1-2) can be treated as a solid having crystallinity and thus, the compound (1-2) is

excellent in terms of handlability and transportability upon industrial production.

With regard to the crystal of the compound (1-2) used in the present invention, the top temperature of the endothermic peak according to differential scanning calorimetry is in the range of 205°C to 215°C, more preferably in the range of 206°C to 214°C, further preferably in the range of 207°C to 213°C, and particularly preferably in the range of 207°C to 211°C.

Moreover, in the powder X-ray diffraction peak pattern using Cu-Kα radiation, the crystal of the compound (1-2) used in the present invention has diffraction peaks at diffraction angles 2θ of 7.1±0.2°, 14.6±0.2°, and 16.1±0.2°. In addition, the crystal of the compound (1-2) more preferably has diffraction peaks at diffraction angles 2θ of 20.4±0.2°, 21.4 ±0.2°, 22.0±0.2° and 23.3±0.2°. Further, in addition to the above, the crystal of the compound (1-2) further preferably has diffraction peaks at diffraction angles 2θ of 11.8±0.2°, 12.4±0.2° and 18.5±0.2°.

The purity of the crystal of the compound (1-2) used in the present invention is preferably 90% or more, more preferably 93% or more, further preferably 95% or more, and particularly preferably 98% or more, as determined by area percentage by liquid chromatography analysis.

< Method for producing crystal of compound represented by formula (1-2) >

The crystal of the compound (1-2) used in the present invention can be obtained by precipitating the crystal from a solution containing the compound (1-2) and an aliphatic ketone solvent containing 5 to 9 carbon atoms. The crystal of the compound (1-2) can also be obtained by cooling a solution in which the compound is dissolved in the aliphatic ketone solvent containing 5 to 9 carbon atoms, or by distilling away the aliphatic ketone solvent containing 5 to 9 carbon atoms from the solution, and further, the crystal of the compound (1-2) can also be obtained by mixing a hydrocarbon solvent into the above-described solution. In particular, it is preferable to prepare a solution by further adding an aromatic hydrocarbon solvent containing 6 to 9 carbon atoms to the solution containing the compound (1-2) and the aliphatic ketone solvent containing 5 to 9 carbon atoms, and as necessary, to cool the solution to further reduce the solubility of the compound (1-2) solution, thereby precipitating the crystal.

Examples of the aliphatic ketone solvent containing 5 to 9 carbon atoms that can be used herein may include chain aliphatic ketone solvents containing 5 to 9 carbon atoms, such as diethyl ketone (containing 5 carbon atoms), methyl isobutyl ketone (containing 6 carbon atoms), methyl amyl ketone (containing 7 carbon atoms) and methyl hexyl ketone (containing 8 carbon atoms), and cyclic aliphatic ketone solvents containing 5 to 9 carbon atoms, such as cyclopentanone and cyclohexanone. Among them, cyclic aliphatic ketone solvents containing 5 to 9 carbon atoms are preferable, cyclopentanone or cyclohexanone is more preferable, and cyclohexanone is particularly preferable. By using this cyclic aliphatic ketone solvent containing 5 to 9 carbon atoms, it is also possible to wash the solution with water before precipitating the crystals, and to remove water-soluble impurities such as a basic catalyst, salts produced in the neutralization step, and glycols produced in the hydrolysis step.

The amount of the aliphatic ketone solvent used is preferably in the range of 1 to 20 times the weight of the compound (1-2), more preferably in the range of 2 to 15 times the weight thereof, further preferably in the range of 2 to 10 times the weight thereof, and particularly preferably in the range of 2 to 8 times the weight thereof.

As an aromatic hydrocarbon solvent containing 6 to 9 carbon atoms, benzene, toluene, xylene, etc. can be used, and among these, an aromatic hydrocarbon solvent containing 7 or 8 carbon atoms is preferable, and toluene is particularly preferable.

Hydrocarbon solvents other than the aromatic hydrocarbon solvent containing 6 to 9 carbon atoms include chain or cyclic aliphatic hydrocarbon solvents containing 5 to 10 carbon atoms. Specific examples thereof may include pentane, hexane, heptane, octane, isooctane, cyclopentane, and cyclohexane. Among them, a chain aliphatic hydrocarbon solvents containing 6 to 8 carbon atoms or a cyclic aliphatic hydrocarbon solvents containing 5 or 6 carbon atoms is preferable, and heptane, octane, isooctane, cyclopentane, or cyclohexane is more preferable.

The amount of the hydrocarbon solvent used is preferably in the range of 1 to 10 times by weight, more preferably in the range of 1 to 7 times by weight, and further preferably in the range of 1 to 5 times by weight, with respect to the amount of the compound (1-2). Moreover, the amount of the hydrocarbon solvent used is preferably in the range of 0.1 to 4.0 times by weight, more preferably in the range of 0.2 to 2.0 times by weight, further preferably in the range of 0.2 to 1.5 times by weight, and particularly preferably in the range of 0.2 to 1.0 times by weight, with respect to the amount of the aliphatic ketone solvent containing 5 to 9 carbon atoms.

The temperature at which the hydrocarbon solvent is mixed with the aliphatic ketone solution containing 5 to 9 carbon atoms that contains the compound (1-2) is preferably in the range of 50°C to 120°C, more preferably in the range of 50°C to 100°C, and further preferably in the range of 50°C to 90°C, although it depends on the aliphatic ketone used.

The temperature at which the crystals of the compound (1-2) initiate to be precipitated is preferably in the range of 10°C to 80°C, and more preferably in the range of 30°C to 70°C.

The crystals obtained by the above-mentioned method may be isolated according to an ordinary method, and for example, the crystals can be isolated by centrifugal filtration, etc. Moreover, it is also preferable to further wash the crystals

with a solvent. The solvent used can be removed by drying the obtained crystals.

In the above-described method for producing the compound (1) used in the present invention, all steps such as the hydroxyalkylene oxygenation reaction step, the neutralization step, the hydrolysis step, the crystallization step, the filtration step, the raw material-mixing step, the distillation step, and the drying step are preferably carried out in an atmosphere having little oxygen, which causes oxidation deterioration or coloration, or electrostatic ignition caused by a volatile solvent, or in an inert gas atmosphere such as nitrogen or argon.

The thermoplastic resin of one embodiment of the present invention is not particularly limited, and the present thermoplastic resin includes a polyester resin, a polycarbonate resin, a polyester carbonate resin, an epoxy resin, a polyurethane resin, a polyacrylic acid ester resin, a polymethacrylic acid ester resin, or the like. Among these, the present thermoplastic resin is preferably a polycarbonate resin, a polyester carbonate resin, or a polyester resin, and the present thermoplastic resin more preferably comprises a constituent unit (A) represented by the following formula:

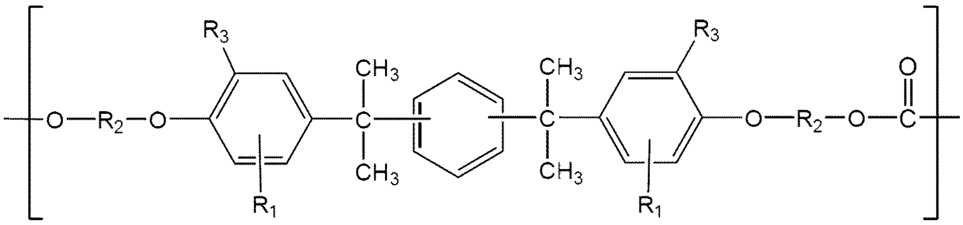

(A)

wherein $R_1$, $R_2$ and $R_3$ are the same as those in the general formula (1).

In the thermoplastic resin of one embodiment of the present invention, the percentage of the constituent unit (A) represented by the above formula in all constituent units is not particularly limited, and it is preferably 1 to 80 mol %, more preferably, 1 to 60 mol %, and particularly preferably 5 to 50 mol %, in all constituent units.

In other words, the thermoplastic resin of one embodiment of the present invention may contain, in addition to the constituent unit (A) represented by the above formula, a constituent unit derived from an aliphatic dihydroxy compound and a constituent unit derived from an aromatic dihydroxy compound, which are generally used as constituent units in polycarbonate resins and polyester carbonate resins.

Specifically, various aliphatic dihydroxy compounds may be mentioned, and particular examples thereof may include 1,4-cyclohexanedimethanol, tricyclodecanedimethanol, 1,3-adamantanedimethanol, 2,2-bis(4-hydroxycyclohexyl)-propane, 3,9-bis(2-hydroxy-1,1-dimethylethyl)-2,4,8,10-tetraoxaspiro[5.5]undecane, 2-(5-ethyl-5-hydroxymethyl-1,3-dioxan-2-yl)-2-methylpropan-1-ol, isosorbide, 1,3-propanediol, 1,4-butanediol, and 1,6-hexanediol.

Various aromatic dihydroxy compounds may be mentioned, and particular examples thereof may include 2,2-bis(4-hydroxyphenyl)propane [bisphenol A], bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl) oxide, bis(4-hydroxyphenyl)sulfide, bis(4-hydroxyphenyl)sulfone, bis(4-hydroxyphenyl)sulfoxide, bis(4-hydroxyphenyl) ketone, and bisphenoxyethanolfluorene.

In addition, the thermoplastic resin of one embodiment of the present invention preferably comprises a constituent unit (B) derived from a monomer represented by the following general formula (6):

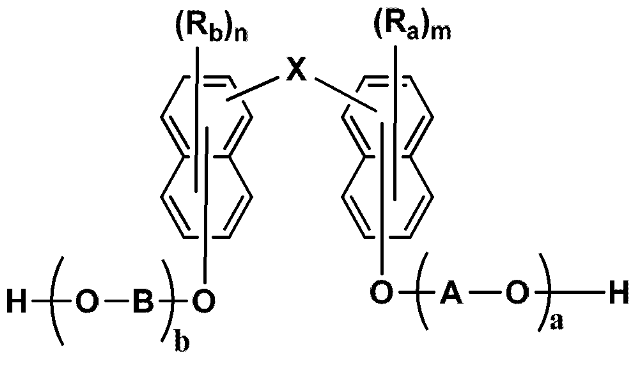

(6)

**In** the above general formula (6), $R_a$ and $R_b$ are each independently selected from the group consisting of a halogen atom, an alkyl group containing 1 to 20 carbon atoms and optionally having a substituent, an alkoxy group containing 1 to 20 carbon atoms and optionally having a substituent, a cycloalkyl group containing 5 to 20 carbon atoms and optionally having a substituent, a cycloalkoxy group containing 5 to 20 carbon atoms and optionally having a

substituent, and an aryl group containing 6 to 20 carbon atoms and optionally having a substituent, a heteroaryl group containing 6 to 20 carbon atoms and optionally having a substituent, which comprises one or more heterocyclic atoms selected from O, N and S, an aryloxy group containing 6 to 20 carbon atoms and optionally having a substituent, and -C≡C-$R_h$. $R_h$ represents an aryl group containing 6 to 20 carbon atoms and optionally having a substituent, or a heteroaryl group containing 6 to 20 carbon atoms and optionally having a substituent, which comprises one or more heterocyclic atoms selected from O, N and S.

Each of $R_a$ and $R_b$ is preferably a hydrogen atom, an aryl group containing 6 to 20 carbon atoms and optionally having a substituent, or a heteroaryl group containing 6 to 20 carbon atoms and optionally having a substituent, which comprises one or more heterocyclic atoms selected from O, N and S, is more preferably a hydrogen atom or an aryl group containing 6 to 20 carbon atoms and optionally having a substituent, and is further preferably a hydrogen atom or an aryl group containing 6 to 12 carbon atoms and optionally having a substituent.

In the general formula (6), X represents a single bond or a fluorene group optionally having a substituent. X is preferably a single bond or a fluorene group containing 12 to 20 carbon atoms in total and optionally having a substituent.

In the general formula (6), A and B each independently represent an alkylene group containing 1 to 5 carbon atoms and optionally having a substituent, and preferably represent an alkylene group containing 2 or 3 carbon atoms.

In the general formula (6), m and n each independently represent an integer of 0 to 6, preferably an integer of 0 to 3, and more preferably 0 or 1.

In the general formula (6), a and b each independently represent an integer of 0 to 10, preferably an integer of 1 to 3, and more preferably 1 or 2.

Specific examples of the constituent unit (B) may include those derived from 2,2'-bis(2-hydroxyethoxy)-1,1'-binaphthalene (BNE), DPBHBNA, and the like:

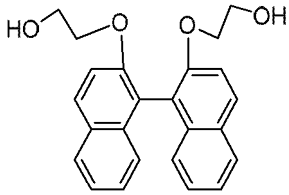
(BNE)

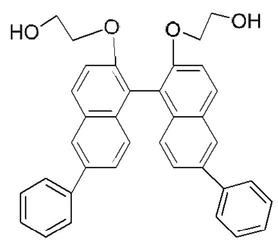
(DPBHBNA)

Moreover, the thermoplastic resin of one embodiment of the present invention preferably comprises a constituent unit (C) derived from a monomer represented by the following general formula (7):

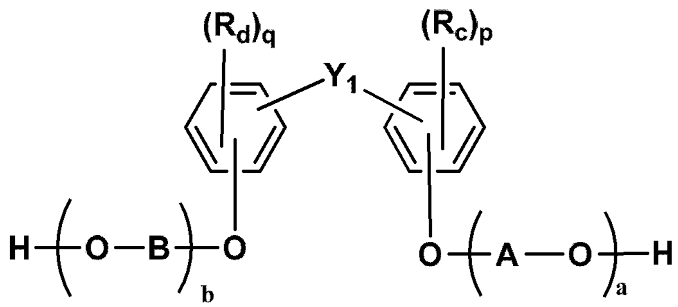
(7)

In the above general formula (7), $R_c$ and $R_d$ are each independently selected from the group consisting of a halogen atom, an alkyl group containing 1 to 20 carbon atoms and optionally having a substituent, an alkoxy group containing 1 to 20 carbon atoms and optionally having a substituent, a cycloalkyl group containing 5 to 20 carbon atoms and optionally having a substituent, a cycloalkoxy group containing 5 to 20 carbon atoms and optionally having a substituent, and an aryl group containing 6 to 20 carbon atoms and optionally having a substituent. Each of $R_c$ and $R_d$ is preferably a hydrogen atom, an aryl group containing 6 to 20 carbon atoms and optionally having a substituent, or a heteroaryl group containing 6 to 20 carbon atoms and optionally having a substituent, which comprises one or more heterocyclic atoms selected from O, N and S, is more preferably a hydrogen atom or an aryl group containing 6 to 20 carbon atoms and optionally having a substituent, and is further preferably a hydrogen atom or an aryl group containing 6 to 12 carbon atoms and optionally having a substituent.

In the above general formula (7), $Y_1$ represents any of a single bond, a fluorene group optionally having a substituent, or any of structural formulae represented by the following formulae (8) to (15), and preferably represents a single bond or a structural formula represented by the following formula (8):

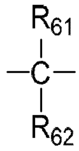

(8)

$-S-$

(9)

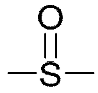

(10)

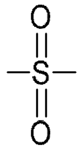

(11)

$-(CH_2)_r-$

(12)

$-O-$

(13)

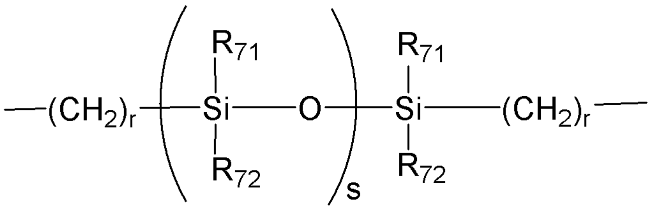

(14)

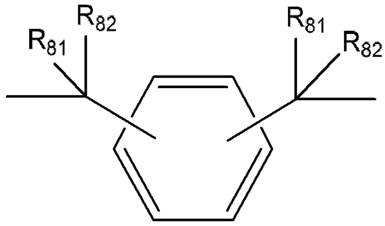

(15)

In the above formulae (8) to (15), $R_{61}$, $R_{62}$, $R_{71}$, $R_{72}$, $R_{81}$ and $R_{82}$ each independently represent a hydrogen atom, a halogen atom, an alkyl group containing 1 to 20 carbon atoms and optionally having a substituent, or an aryl group containing 6 to 30 carbon atoms and optionally having a substituent, or $R_{61}$ and $R_{62}$, or $R_{71}$ and $R_{72}$ bind to each other to form a carbon ring or heteroring, containing 1 to 20 carbon atoms and optionally having a substituent.

In the formulae (8) to (15), r and s each independently represent an integer of 0 to 5000.

In the above general formula (7), A and B each independently represent an alkylene group containing 1 to 5 carbon atoms and optionally having a substituent, and preferably represent an alkylene group containing 2 or 3 carbon atoms. In the above general formula (7), p and q each independently represent an integer of 0 to 4, and preferably 0 or 1. In addition, in the above general formula (7), a and b each independently represent an integer of 0 to 10, preferably an integer of 0 to 5, more preferably an integer of 0 to 2, and for example, 0 or 1..

Specific examples of the constituent unit (C) may include those derived from BCFL (9,9-bis(4-hydroxy-3-methylphenyl)fluorene), BPEF (9,9-bis(4-(2-hydroxyethoxy)phenyl)fluorene), BPPEF (9,9-bis(4-(2-hydroxyethoxy)-3-phenylphenyl)fluorene), BNEF (9,9-bis[6-(2-hydroxyethoxy)naphthalen-2-yl]fluorene), bisphenol A, bisphenol AP, bisphenol AF, bisphenol B, bisphenol BP, bisphenol C, bis(4-hydroxyphenyl)-2,2-dichloroethylene, bisphenol E, bisphenol F, bisphenol G, bisphenol M (BPM), bisphenol S, bisphenol P, bisphenol PH, bisphenol TMC, bisphenol P-AP (4,4'-(1-phenylethylidene) bisphenol), bisphenol P-CDE (4,4'-cyclododecylidene bisphenol), bisphenol P-HTG (4,4'-(3,3,5-trimethylcyclohexylidene) bisphenol), bisphenol P-MIBK (4,4'-(1,3-dimethylbutylidene) bisphenol), bisphenol PEO-FL (bisphenoxyethanolfluorene), bisphenol P-3MZ (4-[1-(4-hydroxyphenyl)-3-methylcyclohexyl]phenol), bisphenol OC-FL (4,4'-[1-[4-[1-(4-hydroxyphenyl)-1-methylethyl]phenyl]ethylidene]bisphenol), bisphenol Z, BP-2EO (2,2'-[[1,1'-biphenyl]-4,4'-diylbis(oxy)bisethanol), S-BOC (4,4'-(1-methylethylidene)bis(2-methylphenol)), TrisP-HAP (4,4',4''-ethylidene trisphenol). Among these, the constituent unit (C) is preferably that derived from the following BPEF, BNEF, BPM or BCFL:

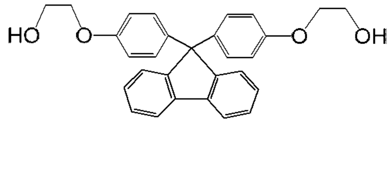

(BPEF)

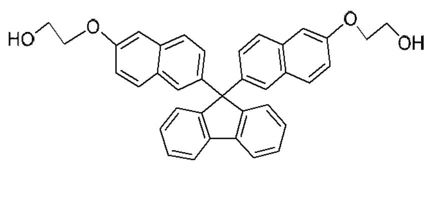

(BNEF)

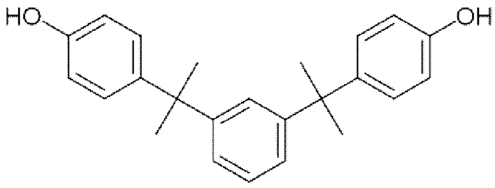

(BPM)

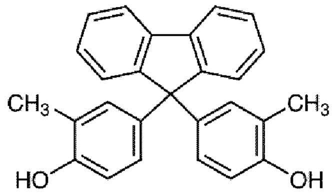

(BCFL)

The thermoplastic resin of one embodiment of the present invention may comprise a constituent unit derived from a monomer represented by the following general formula (8):

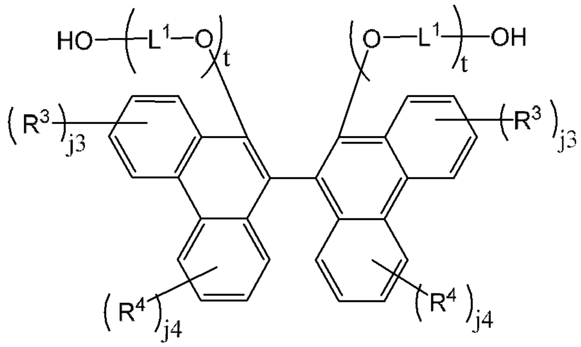

(8)

In the above general formula (8),

$L^1$ each independently represents a divalent linking group;
$R^3$ and $R^4$ each independently represent a halogen atom or a substituent containing 1 to 20 carbon atoms and optionally containing an aromatic group;
j3 and j4 each independently represent an integer of 0 to 4; and
t represents an integer of 0 or 1.

The thermoplastic resin of one embodiment of the present invention may be: a polymer that essentially comprises the constituent unit (A), and comprises the constituent unit (B) and does not comprise the constituent unit (C); a polymer that comprises the constituent unit (C) and does not comprise the constituent unit (B); a copolymer that comprises the constituent unit (B) and the constituent unit (C); a mixture of a polymer having the constituent unit (B) and a polymer having the constituent unit (C); or a combination thereof. Examples of the polymer that comprise the constituent unit (C) and does not comprise the constituent unit (B) may include those having the constituent units represented by the following formulae (I-1) to (I-3), and examples of the copolymer having the constituent unit (B) and the constituent unit (C) may include those having the constituent units represented by the following formulae (II-1) to (II-4).

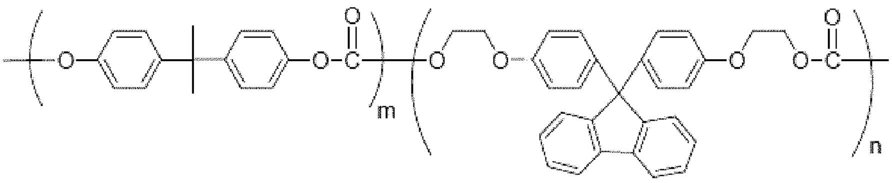

(I－1)

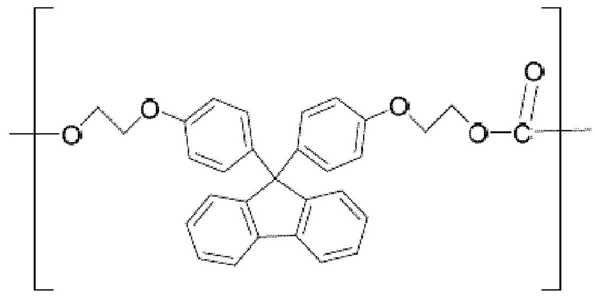

(I-2)

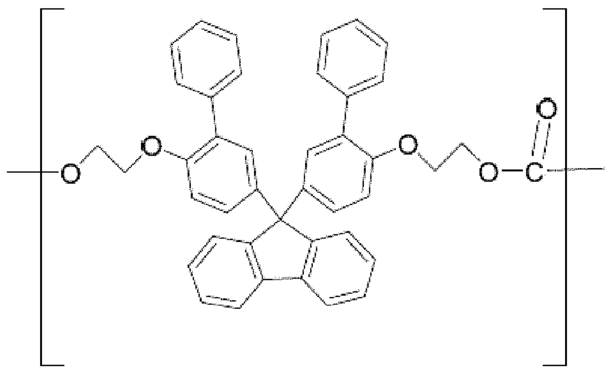

(I-3)

In the above formula (I-1), m and n are each an integer of 1 to 10, preferably an integer of 1 to 5, and more preferably 1, and

the number of repeating units in the formula (I-3) is an integer of 1 to 10, preferably an integer of 1 to 5, and more preferably 1.

Moreover, as a polymer having multiple types of constituent units, both a block copolymer, in which the values of m and n are large, such as, for example, 100 or more, and a random copolymer, can be adopted. Between these, a random copolymers is preferable, and more preferably, a random copolymers, in which m and n are 1, are used.

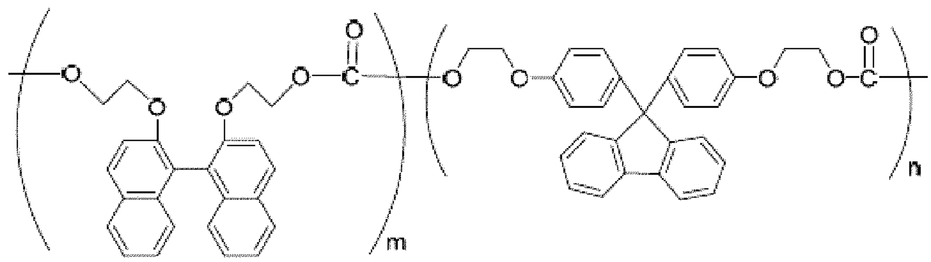

(I I-1)

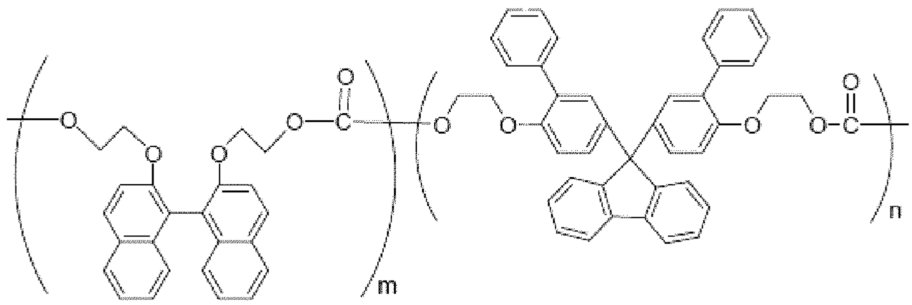

(I I-2)

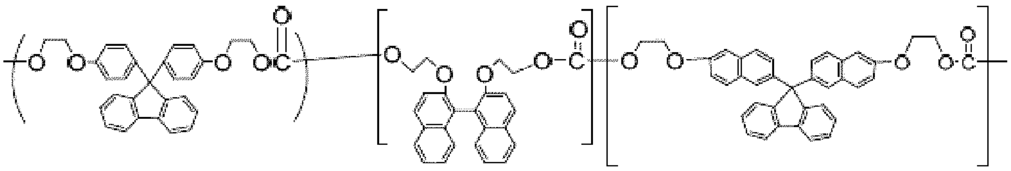

(II-3)

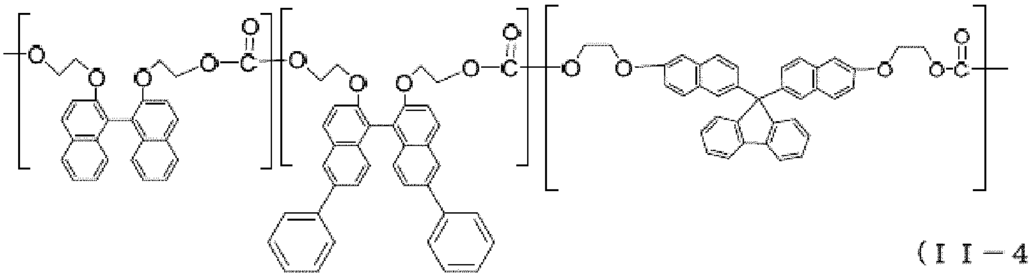

(II-4)

In the formulae (II-1) to (II-4), m and n are each independently an integer of 1 to 10, preferably an integer of 1 to 5, and more preferably 1.

Moreover, as a polymer having multiple types of constituent units, both a block copolymer, in which the values of m and n are large, such as, for example, 100 or more, and a random copolymer, can be adopted. Between these, a random copolymers is preferable, and more preferably, a random copolymers, in which m and n are 1, are used.

In the copolymer, the molar ratio between the constituent unit (B) and the constituent unit (C) is preferably 1 : 99 to 99 : 1, more preferably 10 : 90 to 90 : 10, further preferably 15 : 85 to 85 : 15, and particularly preferably 30 : 70 to 70 : 30. In addition, in the mixture, the mass ratio between a polymer having the constituent unit (B) and a polymer having the constituent unit (C) is preferably 1 : 99 to 99 : 1, more preferably 10 : 90 to 90 : 10, further preferably 15 : 85 to 85 : 15, and particularly preferably 30 : 70 to 70 : 30.

It is also preferable that the thermoplastic resin of one embodiment of the present invention further comprises a constituent unit derived from at least one monomer selected from the following monomer group:

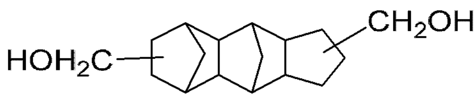
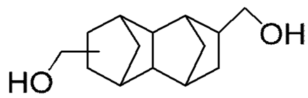

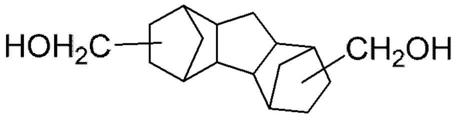
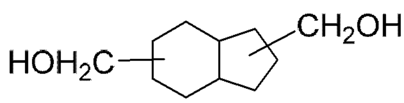

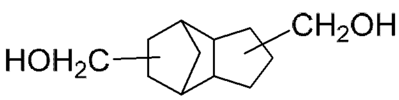
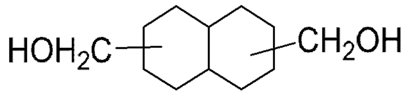

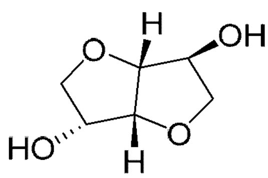
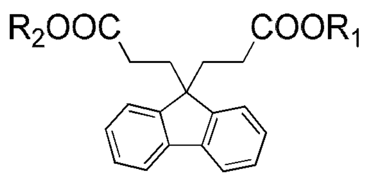

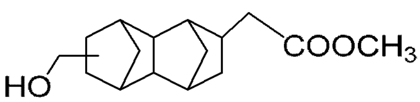
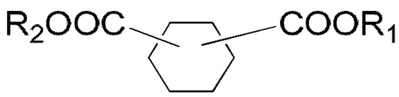

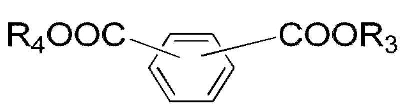

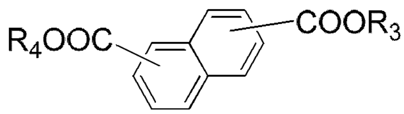

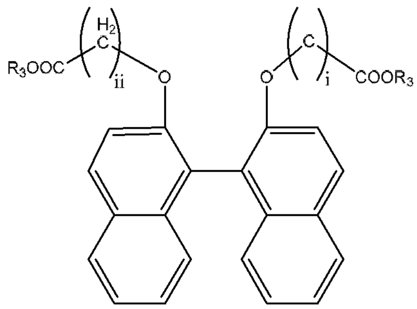

In the above formulae, $R_1$ and $R_2$ each independently represent a hydrogen atom, a methyl group or an ethyl group; $R_3$ and $R_4$ each independently represent an aryl group, a hydrogen atom, a methyl group, an ethyl group or alkylene glycol containing 2 to 5 carbon atoms; and i and ii each independently represent an integer of 1 to 3.

There is a case where the polycarbonate resin of one preferred embodiment of the present invention may comprise, as impurities, an alcoholic compound that may be generated as a by-product upon the production thereof, such as a phenolic compound, or a diol component or a carbonic acid diester that has not reacted and remains.

The alcoholic compound such as the phenolic compound, and the carbonic acid diester, which are both impurities, may cause a reduction in the strength a molded body is formed, or generation of odors. Accordingly, as the contents of these compounds are reduced to the minimum, it is preferable.

The content of the remaining phenolic compound is preferably 3000 ppm by mass or less, more preferably 1000 ppm by mass or less, particularly preferably 300 ppm by mass or less, with respect to 100% by mass of the polycarbonate resin.

The content of the remaining diol component is preferably 1000 ppm by mass or less, more preferably 100 ppm by mass or less, and particularly preferably 10 ppm by mass or less, with respect to 100% by mass of the polycarbonate resin.

The content of the remaining carbonic acid diester is preferably 1000 ppm by mass or less, more preferably 100 ppm by mass or less, and particularly preferably 10 ppm by mass or less, with respect to 100% by mass of the polycarbonate resin.

**In** particular, it is preferable that the contents of compounds such as phenol and t-butyl phenol are small, and it is preferable that the contents of these compounds are within the above-described ranges.

The content of a phenolic compound remaining in the polycarbonate resin can be measured by a method of analyzing a phenolic compound extracted from the polycarbonate resin, using gas chromatography.

The content of an alcoholic compound remaining in the polycarbonate resin can also be measured by a method of analyzing an alcoholic compound extracted from the polycarbonate resin, using gas chromatography.

The contents of a diol component and a carbonic acid diester remaining in the polycarbonate resin can also be measured by a method of extracting these compounds from the polycarbonate resin, and then analyzing them using gas chromatography.

The contents of a by-product alcoholic compound such as a phenolic compound, and a diol component and a carbonic acid diester may be reduced to such an extent that these compounds are undetectable. However, from the viewpoint of productivity, the polycarbonate resin may comprise very small amounts of these compounds in a range in which the compounds do not impair the effects. In addition, if the amounts of these compounds are very small, it is also possible to improve the plasticity upon the melting of the resin.

The content of the remaining phenolic compound, diol component or carbonic acid diester may each be, for example, 0.01 ppm by mass or more, 0.1 ppm by mass or more, or 1 ppm by mass or more, with respect to 100% by mass of the polycarbonate resin.

The content of the remaining alcoholic compound may be, for example, 0.01 ppm by mass or more, 0.1 ppm by mass or more, or 1 ppm by mass or more, with respect to 100% by mass of the polycarbonate resin.

Besides, the contents of the by-product alcoholic compound such as a phenolic compound, the diol component, and the carbonic acid diester in the polycarbonate resin can be regulated to be within the above-described ranges by appropriately adjusting conditions for polycondensation or the setting of apparatuses. Otherwise, the contents of these compounds can also be regulated by determining conditions for an extrusion step after completion of the polycondensation.

For example, the amount of the remaining by-product alcoholic compound such as a phenolic compound is

related to the type of carbonic acid diester used in the polymerization of the polycarbonate resin, the temperature applied to the polymerization reaction, the polymerization pressure, etc. By adjusting these conditions, the amount of the remaining by-product alcoholic compound such as a phenolic compound can be reduced.

For example, when the polycarbonate resin is produced using dialkyl carbonate such as diethyl carbonate, the molecular weight is hardly increased, and a low-molecular-weight polycarbonate is thereby obtained, so that the content of an alcoholic compound generated as a by-product tends to be increased. Such alkyl alcohol has high volatility, and thus, if it remains in the polycarbonate resin, the moldability of the resin tends to be deteriorated. In addition, when the amount of the remaining by-product alcoholic compound such as a phenolic compound is large, it is likely that problems regarding odor occur upon the molding of the resin, or it is also likely that the cleavage reaction of a resin skeleton progresses upon compounding, and a reduction in the molecular weight thereby occurs. Therefore, the content of the by-product alcoholic compound remaining in the obtained polycarbonate resin is preferably 3000 ppm by mass or less, with respect to the amount of the polycarbonate resin (100% by mass). The content of the remaining alcoholic compound is preferably 3000 ppm by mass or less, more preferably 1000 ppm by mass or less, and particularly preferably 300 ppm by mass or less, with respect to 100% by mass of the polycarbonate resin.

< Physical properties of thermoplastic resin >

(1) Refractive index (nD)

In one embodiment of the present invention, the thermoplastic resin is characterized in that it has a high refractive index, and the refractive index is preferably 1.500 to 1.700, more preferably 1.550 to 1.700, and particularly preferably 1.580 to 1.650. In the present invention, the refractive index can be measured by the method described in the after-mentioned Examples.

(2) Abbe number (v)

In one embodiment of the present invention, the Abbe number of the thermoplastic resin is preferably 22.0 to 35.0, more preferably 22.0 to 33.0, further preferably 23.0 to 32.0, and particularly preferably 23.0 to 30.0. In the present invention, the Abbe number can be measured by the method described in the after-mentioned Examples.

(3) Glass transition temperature (Tg)

In one embodiment of the present invention, the thermoplastic resin is characterized in that it has high heat resistance, and the glass transition temperature (Tg) is preferably 125°C to 150°C, more preferably 125°C to 145°C, further preferably 125°C to 140°C, and particularly preferably 127°C to 135°C. In the present invention, the glass transition temperature can be measured by the method described in the after-mentioned Examples.

(4) Polystyrene-converted weight average molecular weight (Mw)

In one embodiment of the present invention, the polystyrene-converted weight average molecular weight of the thermoplastic resin is preferably 10,000 to 100,000, more preferably 10,000 to 80,000, and particularly preferably 10,000 to 60,000.

(5) Photoelastic coefficient

In one embodiment of the present invention, the thermoplastic resin is characterized in that it has a low photoelastic coefficient, and the photoelastic coefficient is preferably 25 to 45, more preferably 25 to 38, and particularly preferably, 28 to 38. In the present invention, the photoelastic coefficient can be measured by the method described in the after-mentioned Examples.

(6) Water absorption percentage

In one embodiment of the present invention, the thermoplastic resin is characterized in that it has a low water absorption percentage, and the water absorption percentage is preferably 0.40% or less, and more preferably 0.36% or less. The lower limit value thereof is generally about 0.1%. In the present invention, the water absorption percentage can be measured by the method described in the after-mentioned Examples.

(7) Water absorption dimensional change percentage

In one embodiment of the present invention, the thermoplastic resin is characterized in that it has a low water absorption dimensional change percentage, and the water absorption dimensional change percentage is preferably 0.045% or less, and more preferably 0.040% or less. The lower limit value thereof is generally about 0.01%. In the present invention, the water absorption dimensional change percentage can be measured by the method described in the aftermentioned Examples.

< Thermoplastic resin composition >

Another embodiment of the present invention is a thermoplastic resin composition comprising the aforementioned thermoplastic resin and additives. The thermoplastic resin composition of the present embodiment may also comprise a resin other than the thermoplastic resin of the present invention comprising the aforementioned constituent unit (A), in a range in which such a resin does not impair the desired effects of the present embodiment. Such a resin is not particularly limited, and it may be, for example, at least one resin selected from the group consisting of a polycarbonate resin, a polyester resin, a polyester carbonate resin, a (meth)acrylic resin, a polyamide resin, a polystyrene resin, a cycloolefin resin, an acrylonitrile-butadiene-styrene copolymer resin, a vinyl chloride resin, a polyphenylene ether resin, a polysulfone resin, a polyacetal resin, and a methyl methacrylate-styrene copolymer resin. Various types of known resins can be used as such resins, and one type of such resin alone can be added to, or a combination of two or more types of such resins can be added to the thermoplastic resin composition.

[Antioxidant]

The thermoplastic resin composition preferably comprises an antioxidant as an additive described above.

The antioxidant preferably comprises at least one of a phenolic antioxidant and a phosphite-based antioxidant.

Examples of the phenolic antioxidant may include 1,3,5-tris(3,5-di-tert-butyl-4-hydroxyphenylmethyl)-2,4,6-trimethylbenzene, 1,3,5-tris(3,5-di-tert-butyl-4-hydroxybenzyl)-1,3,5-triazin-2,4,6-(1H,3H,5H)-trione, 4,4',4''-(1-methylpropanyl-3-ylidene)tris(6-tert-butyl-m-cresol), 6,6'-di-tert-butyl-4,4'-butylidene di-m-cresol, octadecyl-3-(3,5-di-tert-butyl-4-hydroxyphenyl)propionate, pentaerythritol-tetrakis[3-(3,5-di-tert-butyl-4-hydroxyphenyl)propionate], 3,9-bis {2-[3-(3-tert-butyl-4-hydroxy-5-methylphenyl)propionyloxy]-1,1-dimethylethyl}-2,4,8,10-tetraoxospiro[5.5]undecane, and pentaerythritol-tetrakis[3-(3,5-di-tert-butyl-4-hydroxyphenyl)propionate]. Among these, pentaerythritol-tetrakis [3-(3,5-di-tert-butyl-4-hydroxyphenyl)propionate] is preferable.

Examples of the phosphite-based antioxidant may include 2-ethylhexyl diphenyl phosphite, isodecyl diphenyl phosphite, triisodecyl phosphite, triphenyl phosphite, 3,9-bis(octadecyloxy)-2,4,8,10-tetraoxy-3,9-diphosphaspiro[5.5] undecane, 3,9-bis(2,6-di-tert-butyl-4-methylphenoxy)-2,4,8,10-tetraoxa-3,9-diphosphaspiro[5.5]undecane, 2,2'-methylenebis(4,6-di-tert-butylphenyl)2-ethylhexyl phosphite, tris(2,4-di-tert-butylphenyl)phosphite, tris(nonylphenyl)phosphite, tetra-C12-15-alkyl(propane-2,2-diylbis(4,1-phenylene))bis(phosphite), and 3,9-bis(2,6-di-tert-butyl-4-methylphenoxy)-2,4,8,10-tetraoxa-3,9-diphosphaspiro[5.5]undecane. Among these, 3,9-bis(2,6-di-tert-butyl-4-methylphenoxy)-2,4,8,10-tetraoxa-3,9-diphosphaspiro[5.5]undecane is preferable.

As such antioxidants, the aforementioned compounds may be used alone as a single type, or may also be used as a mixture of two or more types.

The antioxidant is preferably comprised in the thermoplastic resin composition in an amount of 1 ppm by weight to 3000 ppm by weight, with respect to the total weight of the resin composition. The content of the antioxidant in the thermoplastic resin composition is more preferably 50 ppm by weight to 2500 ppm by weight, further preferably 100 ppm by weight to 2000 ppm by weight, particularly preferably 150 ppm by weight to 1500 ppm by weight, and further particularly preferably 200 ppm by weight to 1200 ppm by weight.

[Mold release agent]

The thermoplastic resin composition preferably comprises a mold release agent as an additive described above.

Examples of the mold release agent may include ester compounds including glycerin fatty acid esters such as mono/diglyceride of glycerin fatty acid, glycol fatty acid esters such as propylene glycol fatty acid ester and sorbitan fatty acid ester, higher alcohol fatty acid esters, full esters of aliphatic polyhydric alcohol and aliphatic carboxy acid, and monofatty acid esters. When an ester of aliphatic polyhydric alcohol and aliphatic carboxy acid is used as a mold release agent, any of a monoester, a full ester, and the like can be adopted. For example, those other than full esters, such as a monoester, may be used.

Specific examples of the mold release agent may include the following substances: namely,

sorbitan fatty acid esters, such as sorbitan stearate, sorbitan laurate, sorbitan oleate, sorbitan trioleate, sorbitan tribehenate, sorbitan stearate, sorbitan tristearate, and sorbitan caprylate;
propylene glycol fatty acid esters, such as propylene glycol monostearate, propylene glycol monooleate, propylene glycol monobehenate, propylene glycol monolaurate, and propylene glycol monopalmitate;
higher alcohol fatty acid esters, such as stearyl stearate;
glycerin fatty acid ester monoglycerides, which include: monoglycerides including glycerin monostearate, glycerin monohydroxystearate such as glycerin mono-12-hydroxystearate, glycerin monooleate, glycerin monobehenate, glycerin monocaprylate, glycerin monocaprate and glycerin monolaurate; and mono/diglycerides including glycerin mono/distearate, glycerin mono/distearate, glycerin mono/dibehenate, glycerin mono/dioleate;
acetylated monoglycerides of glycerin fatty acid esters, such as glycerin diacetomonolaurate;
organic acid monoglycerides of glycerin fatty acid esters, such as citric acid fatty acid monoglyceride, succinic acid fatty acid monoglyceride, and diacetyl tartaric acid fatty acid monoglyceride; and
polyglycerin fatty acid esters, such as diglycerin stearate, diglycerin laurate, diglycerin oleate, diglycerin monostearate, diglycerin monolaurate, diglycerin monomyristate, diglycerin monooleate, tetraglycerin stearate, decaglycerin laurate, decaglycerin oleate, and polyglycerin polyricinoleate.

The mold release agent is preferably comprised in the thermoplastic resin composition in an amount of 1 ppm by weight to 5000 ppm by weight, with respect to the total weight of the resin composition. The content of the mold release agent in the thermoplastic resin composition is more preferably 50 ppm by weight to 4000 ppm by weight, further preferably 100 ppm by weight to 3500 ppm by weight, particularly preferably 500 ppm by weight to 13000 ppm by weight, and further particularly preferably 1000 ppm by weight to 2500 ppm by weight.

[Other additives]

Additives other than the aforementioned antioxidant and mold release agent may also be added to the thermoplastic resin composition. Examples of the additives that may be comprised in the thermoplastic resin composition may include a compounding agent, a catalyst inactivator, a thermal stabilizer, a plasticizer, a filler, an ultraviolet absorber, a rust inhibitor, a dispersant, an antifoaming agent, a leveling agent, a flame retardant, a lubricant, a dye, a pigment, a bluing agent, a nucleating agent, and a clearing agent.
The content of additives other than the antioxidant and the mold release agent in the thermoplastic resin composition is preferably 10 ppm by weight to 5.0% by weight, more preferably 100 ppm by weight to 2.0% by weight, and further preferably 1000 ppm by weight to 1.0% by weight, but is not limited thereto.
The aforementioned additives are likely to adversely affect transmittance. Thus, it is preferable not to add such additives excessively, and more preferably, the total additive amount is, for example, within the aforementioned range.

< Optical member >

The thermoplastic resin or the thermoplastic resin composition of the present invention (hereinafter simply abbreviated as a "resin composition") can be preferably used in an optical member. In one embodiment of the present invention, an optical member comprising the resin composition of the present invention is provided. In one embodiment of the present invention, the optical member may include, but is not limited to, an optical disk, a transparent conductive substrate, an optical card, a sheet, a film, an optical fiber, a lens, a prism, an optical film, a substrate, an optical filter, a hard coat film, and the like. The resin composition of the present invention has high fluidity, and can be molded according to a cast method. Hence, the present resin composition is preferably used, in particular, in production of a thin optical member. In a preferred embodiment of the present invention, the optical member produced using the resin composition of the present invention may be an optical lens. In another preferred embodiment of the present invention, the optical member produced using the resin composition of the present invention may be an optical film.
When an optical member comprising the resin composition of the present invention is produced according to injection molding, the optical member is preferably molded under conditions of a cylinder temperature of 260°C to 350°C and a mold temperature of 90°C to 170°C. The optical member is more preferably molded under conditions of a cylinder temperature of 270°C to 320°C and a mold temperature of 100°C to 160°C. When the cylinder temperature is higher than 350°C, the resin composition is decomposed and colored. On the other hand, when the cylinder temperature is lower than 260°C, the melt viscosity becomes high, and it easily becomes difficult to mold the optical member. Moreover, when the mold temperature is higher than 170°C, it easily becomes difficult to remove a molded piece consisting of the resin composition from a mold. On the other hand, when the mold temperature is lower than 90°C, the resin is hardened too quickly in a mold upon the molding thereof, and it becomes difficult to control the shape of a molded piece, or it easily becomes difficult to sufficiently transcribe a vehicle placed in a mold.

< Optical lens >

In one embodiment of the present invention, the resin composition can be preferably used in an optical lens. Since the optical lens produced using the resin composition of the present invention has a high refractive index and is excellent in terms of heat resistance, it can be used in fields in which expensive glass lenses having a high refractive index have been conventionally used, such as telescopes, binoculars and TV projectors, and thus, the optical lens produced using the present resin composition is extremely useful.

For instance, regarding a lens used for smart phones, a lens molded from a thermoplastic resin comprising the constituent unit (A) is overlapped with a lens molded from a resin comprising the constituent unit represented by any one of the formulae (II-1) to (II-4) or a resin comprising a constituent unit derived from a monomer represented by any one of the following formulae, so that the lenses can be used as a lens unit:

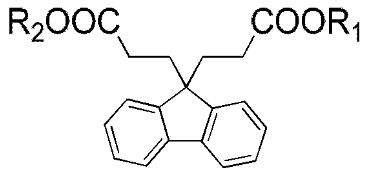

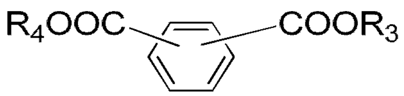
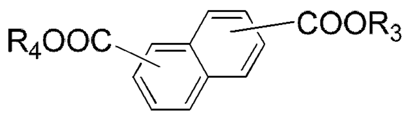

wherein $R_1$ and $R_2$ each independently represent a hydrogen atom, a methyl group or an ethyl group, and $R_3$ and $R_4$ each independently represent a hydrogen atom, a methyl group, an ethyl group or alkylene glycol containing 2 to 5 carbon atoms.

The optical lens of the present invention is preferably used in the shape of an aspherical lens, as necessary. Since the aspherical lens can reduce spherical aberration to substantially zero with a single lens thereof, it is not necessary to eliminate the spherical aberration by a combination of a plurality of spherical lenses, and thereby, it becomes possible to achieve weight saving and a reduction in production costs. Therefore, among the optical lenses, the aspherical lens is particularly useful as a camera lens.

Moreover, since the optical lens of the present invention has high molding fluidity, the present optical lens is particularly useful as a material of a thin and small optical lens having a complicated shape. Regarding the specific size of a lens, the thickness of the central portion is preferably 0.05 to 3.0 mm, more preferably 0.05 to 2.0 mm, and further preferably 0.1 to 2.0 mm. In addition, the diameter is preferably 1.0 mm to 20.0 mm, more preferably 1.0 to 10.0 mm, and further preferably, 3.0 to 10.0 mm. Further, regarding the shape thereof, the optical lens of the present invention is preferably a meniscus lens, in which one surface is a convex, and the other surface is a concave.

The optical lens of the present invention is molded according to any given method such as die molding, cutting, polishing, laser machining, electrical discharge machining, or etching. Among these methods, die molding is more preferable in terms of production costs.

< Optical film >

In one embodiment of the present invention, the resin composition can be preferably used in optical films. In particular, since the optical film produced using the polycarbonate resin of the present invention is excellent in terms of transparency and heat resistance, it can be preferably used for films for use in liquid crystal substrates, optical memory cards, etc.

In order to avoid the mixing of foreign matters into the optical lens as much as possible, the molding environment must be naturally a low-dust environment, and the class is preferably 6 or less, and more preferably 5 or less.

Examples

Hereinafter, the examples of the present invention will be shown together with comparative examples, and the contents of the invention will be described in detail. However, the present invention is not limited to these examples. The physical property values of the obtained resin were measured based on the following methods and devices.

1) Weight average molecular weight (Mw)

The weight average molecular weight of the obtained resin was measured by applying gel permeation chromatography (GPC) and then calculating the weight average molecular weight in terms of standard polystyrene. The used apparatus, columns and measurement conditions are as follows.

- GPC apparatus: HLC-8420GPC, manufactured by Tosoh Corporation
- Columns: TSKgel SuperHM-M x 3, manufactured by Tosoh Corporation

    TSKgel guard column SuperH-H x 1, manufactured by Tosoh Corporation
    TSKgel SuperH-RC x 1, manufactured by Tosoh Corporation

- Detector: RI Detector
- Standard polystyrene: Standard Polystyrene Kit PStQuick C, manufactured by Tosoh Corporation
- Sample solution: 0.2 mass % Tetrahydrofuran solution
- Eluent: Tetrahydrofuran
- Eluent flow rate: 0.6 mL/min
- Column temperature: 40°C

2) Glass transition temperature (Tg)

The glass transition temperature (Tg) was measured according to JIS K7121-1987, using a differential scanning calorimeter by a temperature-increasing program of 10°C/min.
Differential scanning calorimeter: DSC2500, manufactured by TA Instruments

3) Refractive index (nD)

The polycarbonate resin was molded according to JIS B 7071-2: 2018, to obtain a V block, which was then used as a test piece. The refractive index was measured at 23°C using a refractometer (KPR-3000, manufactured by Shimadzu Corporation).

4) Abbe number (ν)

Using a test piece (V block) similar to that used in the measurement of the refractive index, the refractive indexes at wavelengths of 486 nm, 589 nm, and 656 nm were measured at 23°C with a refractometer. Thereafter, the Abbe number was calculated according to the following equation:
Refractometer: KPR-3000, manufactured by Shimadzu Corporation,

$$\nu = (nD-1)/(nF-nC),$$

wherein

nD: refractive index at a wavelength of 589 nm,
nC: refractive index at a wavelength of 656 nm, and
nF: refractive index at a wavelength of 486 nm.

5) Photoelastic coefficient

The obtained resin was dissolved in dichloromethane to obtain a resin solution. This resin solution was spread on a tray, and the solvent was evaporated, so that a film with a thickness of 0.1 mm was obtained and used as a sample piece.
The photoelastic coefficient was measured using an ellipsometer.
Measuring method: The photoelastic coefficient was calculated by measuring a change in birefringence with respect to a change in load at a wavelength of 633 nm.
Ellipsometer: Ellipsometer M-220, manufactured by JASCO Corporation

6) Water absorption percentage (%)

A test piece obtained by injection molding was dried in a hot air dryer for 6 hours. Thereafter, the mass of the test piece was measured and defined as M0. Subsequently, the test piece was placed into an environmental tester controlled under high temperature and high humidity conditions. The test piece was removed after 72 hours, and the mass was measured and defined as Mt. The water absorption percentage (%) was calculated using the following formula:

$$\text{Water absorption percentage (\%)} = (Mt-M0)/M0 \times 100$$

It is to be noted that the mass measurement was carried out in an environment controlled at 23°C±2°C (21°C to 25°C).

7) Water absorption dimensional change percentage (%)

A test piece obtained by injection molding was dried in a hot air dryer for 6 hours. Thereafter, the dimension of the test piece was measured and defined as D0. Subsequently, the test piece was placed into an environmental tester controlled under high temperature and high humidity conditions. The test piece was removed after 72 hours, and the dimension was measured and defined as Dt. The water absorption dimensional change percentage (%) was calculated using the following formula:

$$\text{Dimensional change percentage (\%)} = (Dt-D0)/D0 \times 100$$

It is to be noted that the dimension was measured in an environment controlled at 23°C±2°C (21°C to 25°C).

Measuring apparatus: Image dimension measuring instrument LM-1100 (manufactured by KEYENCE CORPORATION).

<Synthetic Example 1> (Production of compound (1-2))

25.0 g of the compound (2-2), 5.9 g of ethylene carbonate, 45.0 g of toluene, 0.62 g of potassium hydroxide, and 0.45 g of tetrabutylammonium bromide were added into a four-neck flask, and the atmosphere in the flask was replaced with nitrogen. Thereafter, the temperature of the liquid in the flask was increased to 105 to 110°C, and the liquid was then stirred continuously for 10 hours. After that, the temperature of the liquid was decreased to 90°C, 8.8g of water was added thereto, and the obtained mixture was then retained at that temperature for 1 hour.

Subsequently, the temperature of the liquid was decreased to 85°C, and 3.4g of 12% hydrochloric acid water was then added to the reaction solution to neutralize it. Thereafter, the temperature was decreased to 25°C, and cooling and stirring were continuously carried out overnight. After that, crystals were separated by filtration.

Subsequently, 17.8 g of the filtered crystals and 178.0 g of cyclohexanone were added into a four-neck flask for dissolution. Into the flask, 35.6 g of water was added, and the obtained mixture was heated to 90°C. The reaction mixture was stirred at that temperature for 30 minutes and was then left at rest, and the separated water layer was removed. This water-washing operation was repeated three times. The solution after the water washing was cooled to 60°C, and 53.4 g of toluene was added thereto, so that crystals initiated to be precipitated. The solution was cooled to 25°C, and was continuously stirred overnight. The precipitated crystals were separated by filtration and were then dried to obtain 8.7 g of the compound (1-2). The analytical method for the compound is shown after Table 1.

$^1$H-NMR (400 MHz, solvent: $CDCl_3$) δ < ppm >:1.30-1.86 (m, 19H), 2.49 (s, 1H), 2.88-2.90 (s, 1H), 3.99-4.00 (2H), 4.05-4.06 (2H), 6.47-7.28 (m, 4H).

$^{13}$C-NMR (400 MHz, solvent: $CDCl_3$) δ < ppm >: 21.57, 26.46, 27.23, 30.96, 33.45, 37.33, 43.09, 61.91, 69.75, 115.96, 122.33, 124.42, 127.66, 132.47, 134.79, 140.02, 151.15, 153.55.

The obtained crystals were analyzed by HPLC, and as a result, the purity was measured to be 98.6%.

The obtained crystals of the compound (1-2) were subjected to differential scanning calorimetry (DSC), and as a result, the top temperature of the endothermic peak was measured to be 209.4°C. The differential scanning calorimetry (DSC) data are shown in Figure 1.

The diffraction angles 2θ (°) of the diffraction peaks that appeared in the powder X-ray diffraction (PXRD) measurement of the obtained crystals of the compound (1-2), and the peaks with a relative integrated intensity of 30 or more based on the peak with the largest integrated intensity, are shown in Table 1 below. A PXRD measurement chart is shown in Figure 2.

[Table 1]

| No. | 2θ (°) | Relative integrated intensity | No. | 2θ (°) | Relative integrated intensity |
|---|---|---|---|---|---|
| 1 | 7.1 | 67-8 | 10 | 18.5 | 28.0 |
| 2 | 11.1 | 13.5 | 11 | 18.7 | 10.0 |
| 3 | 11.8 | 34.4 | 12 | 20.4 | 64.7 |
| 4 | 12.4 | 33.7 | 13 | 21.4 | 44.2 |
| 5 | 14.2 | 24 9 | 14 | 22.0 | 78.3 |
| 6 | 14.6 | 88.9 | 15 | 22.4 | 15.4 |
| 7 | 15.0 | 33.9 | 16 | 23.3 | 54.6 |
| 8 | 15.8 | 19.0 | 17 | 25.5 | 24.1 |
| 9 | 16.1 | 100.0 | | | |

< Analytical method >

1. Reaction composition, purity analysis (the analysis value is shown as an area percentage)

Measuring device: High performance liquid chromatography analyzer (manufactured by Shimadzu Corporation)
Pump: LC-20AD
Column oven: CTO-20A
Detector: SPD-20A
Detection wavelength: 280 nm
Column: HALO-C18
Oven temperature: 50°C
Flow rate: 0.7 mL/min
Mobile phase: (A) 0.2 vol.% acetic acid aqueous solution, (B) methanol
Gradient conditions: (A) vol.% (time from initiation of the analysis) 50% (0 min) → 80% (4 min) → 100% (14 min) → 100% (19 min)

2. NMR analysis measuring device: Fourier transform nuclear magnetic resonance AVANCE III HD 400 (manufactured by Bruker)

The measurement sample was dissolved in deuterated chloroform ($CDCl_3$), and $^{13}C$-NMR and $^{1}H$-NMR spectra were then measured.

3. Thermal analysis

The crystals (3 mg) obtained in Synthetic Example 1 were weighed into an aluminum pan, and the thermal analysis of the crystals was performed using a differential scanning calorimeter (manufactured by Hitachi High-Tech Science Corporation: DSC7020) under the following operating conditions, with aluminum oxide as a control. The top temperature of the endothermic peak that appeared by the analysis was defined as a melting point.

(Operation conditions)

Temperature-increasing rate: 10°C/min
Measurement temperature range: 30°C to 350°C
Measurement atmosphere: open, nitrogen 50 mL/min.

4. X-ray diffraction method (XRD)

The compound (0.1 g) obtained in the example was filled into the sample-filling section of a glass test plate, and the measurement was then performed using the following device and the following conditions.

[Measurement device]

MiniFlex600-C/Rigaku Corporation

[Measurement conditions]

X-ray source: CuKα
Tube voltage: 40 kV
Tube current: 15 mA
Scan axis: 2θ/θ
Mode: continuous
Measurement range: 2θ = 5° to 90°
Step: 0.02°
Speed measurement time: 10°/min.
Entrance slit: 0.25°
Receiving slit: 13.00 mm

(Example 1)

Raw materials, namely, 27.8234 g (0.0634 mol) of 9,9-bis[4-(2-hydroxyethoxy)phenyl]fluorene (BPEF) represented by the structural formula as shown below, 17.2898 g (0.0272 mol) of 2,2'-[(1,3-phenylenebis(propane-2,2-diyl))bis(2-cyclohexyl-5-methyl-4,1-phenylene))bis(oxy))bis(ethan-1-ol) (crystals of Bis3M6CM-2EO, the compound (1-2)) represented by the structural formula as shown below, 20.0000 g (0.0934 mol) of diphenyl carbonate (DPC), and 20 μl (5.0 x $10^{-7}$ mol) of 2.5 x $10^{-2}$ mol/L sodium hydrogen carbonate aqueous solution were placed in a 300-mL reactor equipped with a stirrer and a distillation apparatus, and the inside of the reaction system was then replaced with nitrogen. This reactor was immersed in an oil bath heated to 200°C, and a transesterification reaction was started. The temperature was increased to 240°C over 140 minutes, and at the same time, the pressure was reduced to 0.1 kPa or less, and the reaction mixture was retained for 30 minutes. Thereafter, nitrogen gas was introduced into the reactor, and the pressure was returned to 101.3 kPa, so as to obtain a polycarbonate resin. The physical properties of the obtained resin are shown in Table 2.

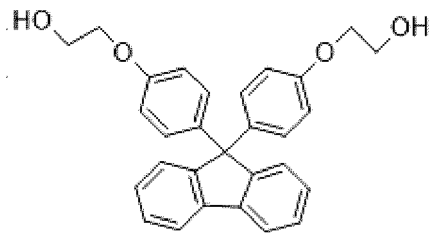

(BPEF)

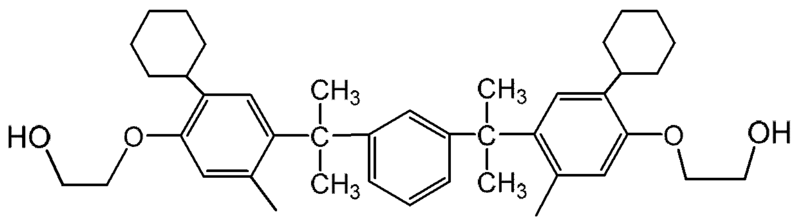

(Compound (1-2), Bis3M6CM-2EO)

(Examples 2 and 3, and Comparative Example 1)

A polycarbonate resin was obtained in the same manner as that of Example 1, with the exception that those shown in Table 2 were used as dihydroxy compounds (diols) in the raw materials. The physical properties of the obtained resin are shown in Table 2.

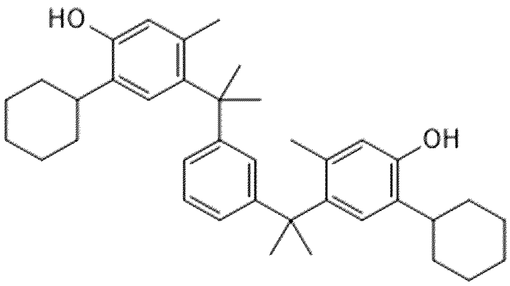

(Bis3M6C-M)

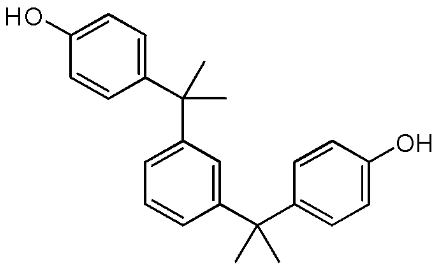

(BPM)

[Table 2]

| | | | | | Physical properties | | | | | | |
|---|---|---|---|---|---|---|---|---|---|---|---|
| | Bis3M6CM-2EO 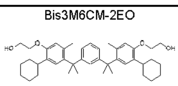 | Bis3M6C-M 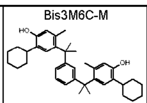 | BPM 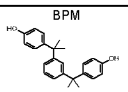 | BPEF 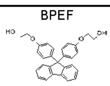 | nd | νd | Tg | Mw | Photoelastic coefficient | Water absorption percentage | Water absorption dimensional change percentage |
| [Unit] | [mol%] | [mol%] | [mol%] | [mol%] | [-] | [-] | [°C] | [-] | [-] | [%] | [%] |
| Example 1 | 30 | 0 | 0 | 70 | 1.604 | 27.0 | 131 | 46900 | 30.6 | 0.36 | 0.040 |
| Example 2 | 70 | 0 | 0 | 30 | 1.576 | 31.2 | 116 | 56000 | 22.3 | 0.25 | 0.028 |
| Example 3 | 50 | 50 | 0 | 0 | 1.516 | 39.5 | 129 | 39800 | 13.6 | 0.23 | 0.025 |
| Comp. Ex. 1 | 0 | 0 | 30 | 70 | 1.626 | 24.9 | 134 | 39900 | 38.5 | 0.43 | 0.048 |

## Claims

1. A thermoplastic resin, comprising a constituent unit (A) derived from a compound represented by the following general formula (1):

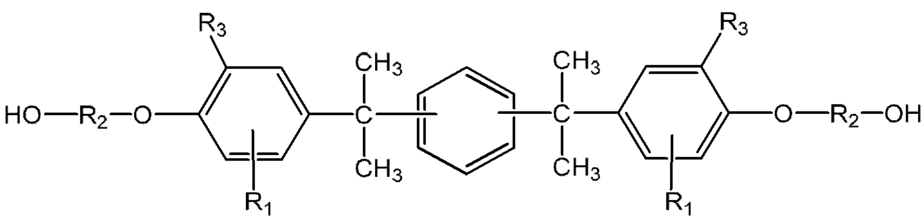

(1)

wherein $R_1$ each independently represents a hydrogen atom or a linear or branched alkyl group containing 1 to 4 carbon atoms, $R_2$ each independently represents an alkylene group containing 1 to 4 carbon atoms, $R_3$ each independently represents a linear, branched or cyclic alkyl group containing 4 to 6 carbon atoms.

**2.** The thermoplastic resin according to claim 1, wherein the compound represented by the general formula (1) is a compound represented by the following general formula (1A) or (1B):

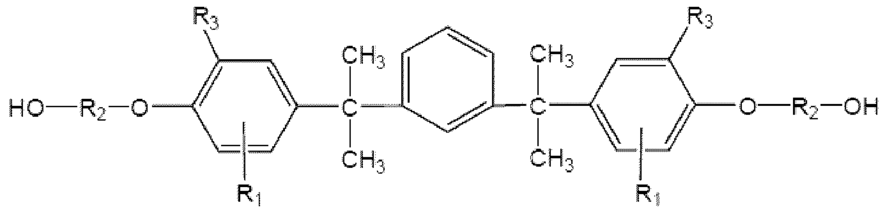

(1A)

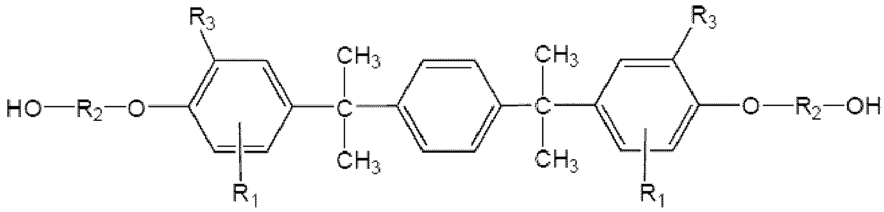

(1B)

wherein $R_1$, $R_2$ and $R_3$ are the same as those in the general formula (1).

**3.** The thermoplastic resin according to claim 1, wherein $R_3$ in the compound represented by the general formula (1) is a t-butyl group or a cyclohexyl group.

**4.** The thermoplastic resin according to claim 1, which is a polycarbonate resin, a polyester carbonate resin, or a polyester resin.

**5.** The thermoplastic resin according to claim 1, which comprises a constituent unit (B) derived from a monomer represented by the following general formula (6) and/or a constituent unit (C) derived from a monomer represented by the following general formula (7):

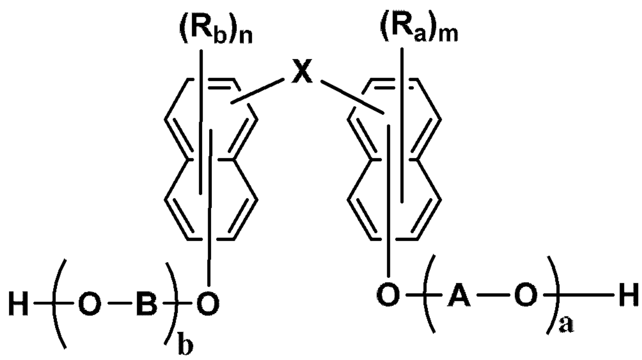

(6)

wherein, in the general formula (6),

$R_a$ and $R_b$ are each independently selected from the group consisting of a hydrogen atom, a halogen atom, an alkyl group containing 1 to 20 carbon atoms and optionally having a substituent, an alkoxy group containing 1 to 20 carbon atoms and optionally having a substituent, a cycloalkyl group containing 5 to 20 carbon atoms and optionally having a substituent, a cycloalkoxy group containing 5 to 20 carbon atoms and optionally having a substituent, and an aryl group containing 6 to 20 carbon atoms and optionally having a substituent, a heteroaryl group containing 6 to 20 carbon atoms and optionally having a substituent, which comprises one or more heterocyclic atoms selected from O, N and S, an aryloxy group containing 6 to 20 carbon atoms and optionally

having a substituent, and -C≡C-$R_h$, wherein

$R_h$ represents an aryl group containing 6 to 20 carbon atoms and optionally having a substituent, or a heteroaryl group containing 6 to 20 carbon atoms and optionally having a substituent, which comprises one or more heterocyclic atoms selected from O, N and S,

X represents a single bond or a fluorene group optionally having a substituent,

A and B each independently represent an alkylene group containing 1 to 5 carbon atoms and optionally having a substituent,

m and n each independently represent an integer of 0 to 6, and

a and b each independently represent an integer of 0 to 10,

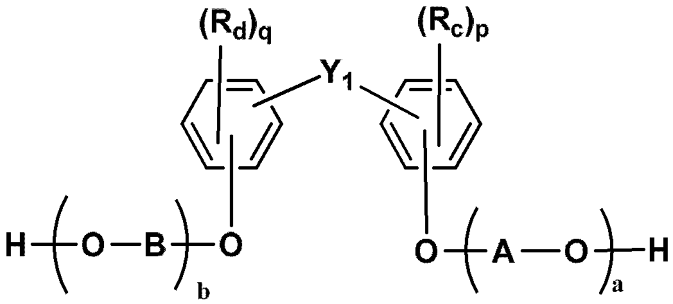

(7)

wherein, in the general formula (7),

$R_c$ and $R_d$ are each independently selected from the group consisting of a hydrogen atom, a halogen atom, an alkyl group containing 1 to 20 carbon atoms and optionally having a substituent, an alkoxy group containing 1 to 20 carbon atoms and optionally having a substituent, a cycloalkyl group containing 5 to 20 carbon atoms and optionally having a substituent, a cycloalkoxy group containing 5 to 20 carbon atoms and optionally having a substituent, and an aryl group containing 6 to 20 carbon atoms and optionally having a substituent,

$Y_1$ represents any of a single bond, a fluorene group optionally having a substituent, or any of structural formulae represented by the following formulae (8) to (15):

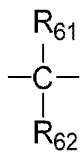

(8)

-S- (9)

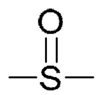

(10)

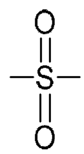

(11)

$-(CH_2)_r-$ (12)

-O- (13)

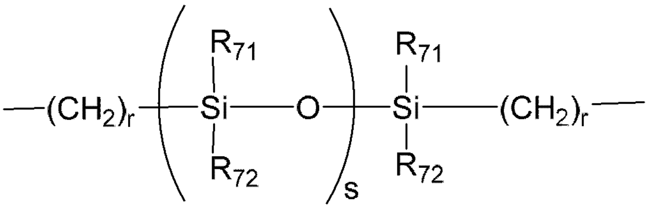

(14)

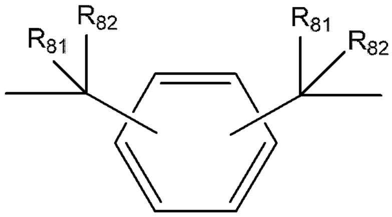

(15)

(wherein, in the formulae (8) to (15),

$R_{61}$, $R_{62}$, $R_{71}$, $R_{72}$, $R_{81}$ and $R_{82}$ are each independently represent a hydrogen atom, a halogen atom, an alkyl group containing 1 to 20 carbon atoms and optionally having a substituent, or an aryl group containing 6 to 30 carbon atoms and optionally having a substituent, or $R_{61}$ and $R_{62}$, or $R_{71}$ and $R_{72}$ bind to each other to form a carbon ring or heteroring, containing 1 to 20 carbon atoms and optionally having a substituent, and

r and s each independently represent an integer of 0 to 5000),

A and B each independently represent an alkylene group containing 1 to 5 carbon atoms and optionally having a substituent,

p and q each independently represent an integer of 0 to 4, and

a and b each independently represent an integer of 0 to 10.

**6.** The thermoplastic resin according to claim 5, wherein in the general formula (6) and the general formula (7), the A and B each independently represent an alkylene group containing 2 or 3 carbon atoms.

**7.** The thermoplastic resin according to claim 5, which comprises, at least, a constituent unit derived from any of BPEF, BNE, BNEF, DPBHBNA, BPM, and BCFL.

**8.** The thermoplastic resin according to claim 1, which comprises a constituent unit derived from at least one monomer selected from the following monomer group:

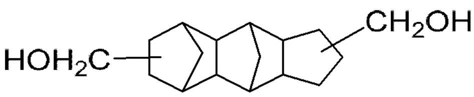

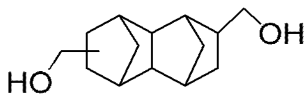

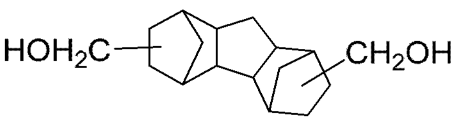

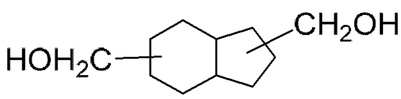

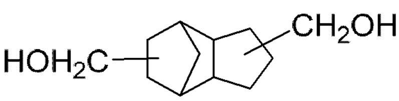

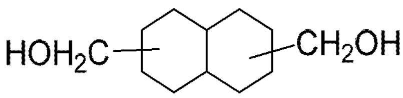

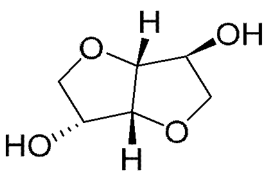

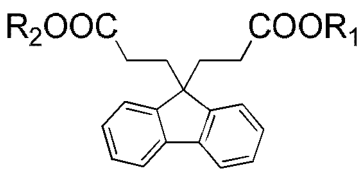

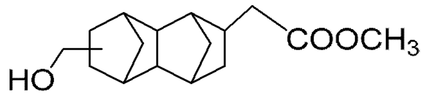

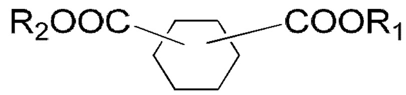

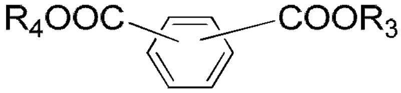

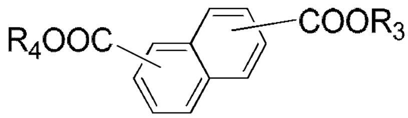

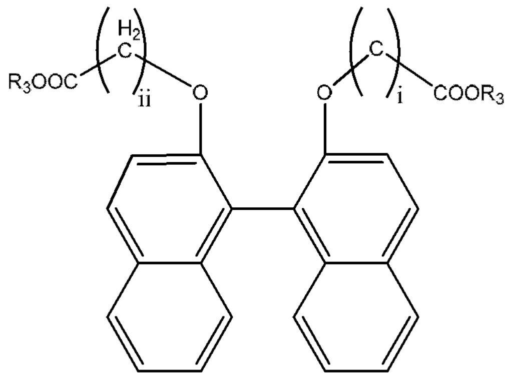

wherein $R_1$ and $R_2$ each independently represent a hydrogen atom, a methyl group or an ethyl group, $R_3$ and $R_4$ each independently represent an aryl group, hydrogen atom, a methyl group, an ethyl group or alkylene glycol containing 2 to 5 carbon atoms, and i and ii each independently represent an integer of 1 to 3.

**9.** The thermoplastic resin according to claim 1, which has a polystyrene-converted weight average molecular weight (Mw) of 10,000 to 100,000.

**10.** The thermoplastic resin according to claim 1, which has a refractive index(nD) of 1.500 to 1.700.

**11.** The thermoplastic resin according to claim 1, which has an Abbe number (v) of 22.0 to 35.0.

**12.** The thermoplastic resin according to claim 1, which has a glass transition temperature of 125°C to 150°C.

**13.** The thermoplastic resin according to claim 1, which has a photoelastic coefficient of 25 to 45.

**14.** The thermoplastic resin according to claim 1, which has a water absorption percentage of 0.40% or less.

**15.** The thermoplastic resin according to claim 1, which has a water absorption dimensional change percentage of 0.045% or less.

**16.** An optical lens, comprising the thermoplastic resin according to claim 1.

[Figure 1]

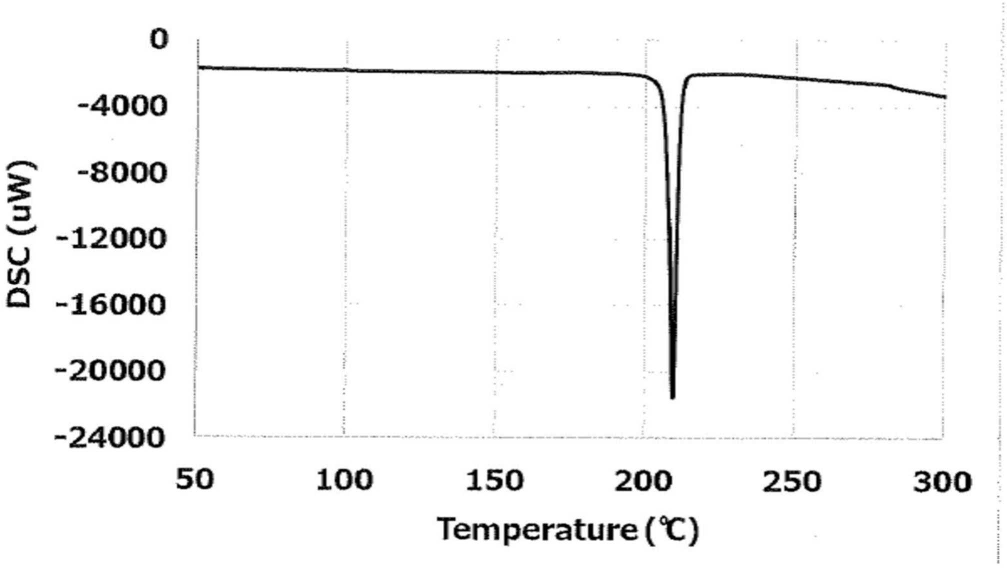


[Figure 2]

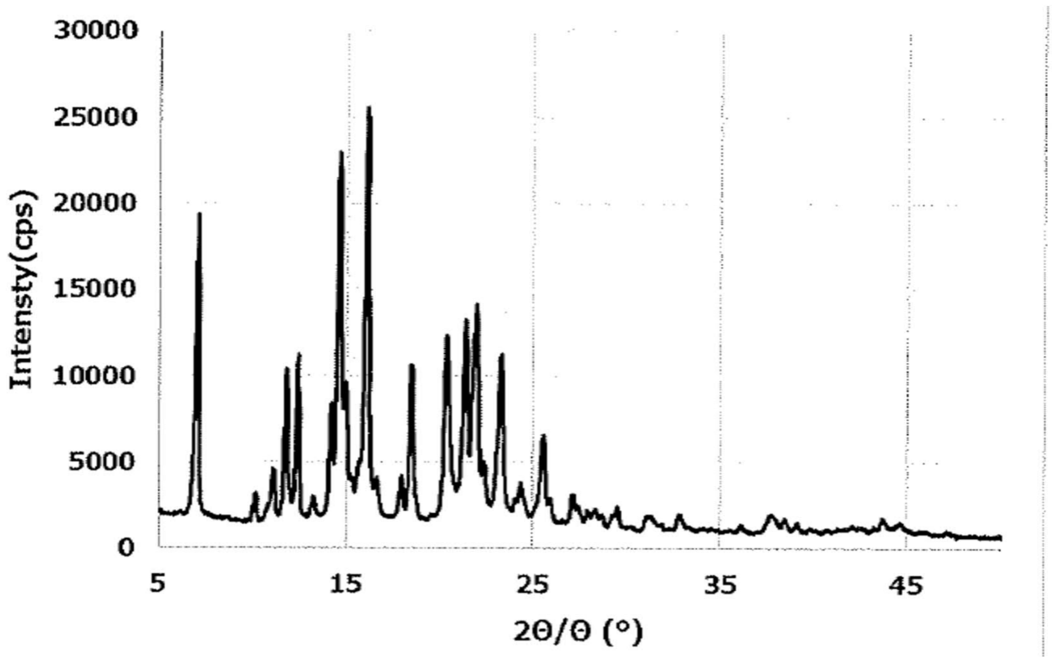

## INTERNATIONAL SEARCH REPORT

International application No.
**PCT/JP2024/017197**

### A. CLASSIFICATION OF SUBJECT MATTER

***C08G 64/02***(2006.01)i; ***C08G 63/64***(2006.01)i; ***C08G 63/672***(2006.01)i; ***C08G 64/16***(2006.01)i; ***G02B 3/00***(2006.01)i
FI: C08G64/02; C08G64/16; C08G63/672; C08G63/64; G02B3/00 Z

According to International Patent Classification (IPC) or to both national classification and IPC

### B. FIELDS SEARCHED

Minimum documentation searched (classification system followed by classification symbols)

C08G64/02; C08G63/64; C08G63/672; C08G64/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2013-56967 A (DIC CORPORATION) 28 March 2013 (2013-03-28) claims, paragraphs [0018]-[0023], [0069]-[0072] | 1-15<br>16 |
| A | US 4746716 A (PPG INDUSTRIES, INC.) 24 May 1988 (1988-05-24) | 1-16 |
| A | JP 2001-058968 A (HONSHU CHEMICAL INDUSTRY CO., LTD.) 06 March 2001 (2001-03-06) | 1-16 |
| A | JP 11-171810 A (JSR CORP.) 29 June 1999 (1999-06-29) | 1-16 |
| A | JP 6-222581 A (FUJI XEROX CO., LTD.) 12 August 1994 (1994-08-12) | 1-16 |
| A | JP 2000-248058 A (TEIJIN CHEMICALS LTD.) 12 September 2000 (2000-09-12) | 1-16 |
| A | US 3544512 A (THE DOW CHEMICAL COMPANY) 01 December 1970 (1970-12-01) | 1-16 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 July 2024** | **23 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/017197**

**C. DOCUMENTS CONSIDERED TO BE RELEVANT**

| Category* | Citation of document, with indication, where appropriate, of the relevant passages | Relevant to claim No. |
|---|---|---|
| P, A | WO 2023/195504 A1 (MITSUBISHI GAS CHEMICAL COMPANY, INC.) 12 October 2023 (2023-10-12) | 1-16 |
| P, A | JP 2023-138918 A (MITSUBISHI GAS CHEMICAL COMPANY, INC.) 03 October 2023 (2023-10-03) | 1-16 |
| P, A | WO 2023/176736 A1 (HONSHU CHEMICAL INDUSTRY CO., LTD.) 21 September 2023 (2023-09-21) | 1-16 |

Form PCT/ISA/210 (second sheet) (July 2022)

**INTERNATIONAL SEARCH REPORT**
**Information on patent family members**

International application No.
**PCT/JP2024/017197**

| Patent document cited in search report | | | Publication date (day/month/year) | Patent family member(s) | | | Publication date (day/month/year) |
|---|---|---|---|---|---|---|---|
| JP | 2013-56967 | A | 28 March 2013 | (Family: none) | | | |
| US | 4746716 | A | 24 May 1988 | US | 4757129 | A | |
| JP | 2001-058968 | A | 06 March 2001 | US | 6326522 | B1 | |
| | | | | EP | 1061061 | A1 | |
| JP | 11-171810 | A | 29 June 1999 | (Family: none) | | | |
| JP | 6-222581 | A | 12 August 1994 | (Family: none) | | | |
| JP | 2000-248058 | A | 12 September 2000 | (Family: none) | | | |
| US | 3544512 | A | 01 December 1970 | (Family: none) | | | |
| WO | 2023/195504 | A1 | 12 October 2023 | TW | 202346410 | A | |
| JP | 2023-138918 | A | 03 October 2023 | (Family: none) | | | |
| WO | 2023/176736 | A1 | 21 September 2023 | TW | 202348592 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018002893 A
- JP 2018002894 A
- JP 2018002895 A
- JP 2018059074 A
- WO 2017078073 A